(19) Europäisches Patentamt
European Patent Office
Office européen des brevets

(11) **EP 2 658 267 A1**

(12) **EUROPEAN PATENT APPLICATION**
published in accordance with Art. 153(4) EPC

(43) Date of publication:
**30.10.2013 Bulletin 2013/44**

(51) Int Cl.:
**H04N 13/00** (2006.01)     **H04N 7/173** (2011.01)

(21) Application number: **12858236.8**

(22) Date of filing: **07.12.2012**

(86) International application number:
**PCT/JP2012/081745**

(87) International publication number:
**WO 2013/089024 (20.06.2013 Gazette 2013/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2011 JP 2011272821**

(71) Applicant: **Sony Corporation
Tokyo 108-0075 (JP)**

(72) Inventor: **TSUKAGOSHI, Ikuo
Tokyo 108-0075 (JP)**

(74) Representative: **Ealey, Douglas Ralph
D Young & Co LLP
120 Holborn
London EC1N 2DY (GB)**

(54) **TRANSMISSION DEVICE, TRANSMISSION METHOD, RECEPTION DEVICE, AND RECEPTION METHOD**

(57)     To satisfactorily transmit a plurality of view streams for a multi-view service.

A multiplexed stream obtained by multiplexing a plurality of view streams is transmitted by a transmission unit. In this case, decoding time stamps are allocated to the plurality of view streams by a time stamp allocation unit, at intervals in which a display period is subdivided.

For example, the plurality of view streams are streams for a stereoscopic image display. Since the decoding time stamps are allocated to the plurality of view streams within the multiplexed stream at intervals in which the display period is subdivided, a decoding order and a reference relationship between views are ensured, and thus a decoding process can be smoothly performed on the reception side without a failure.

## FIG. 3

DTS(view2)  = DTS(view1) + (1/3)*F

DTS(view3)  = DTS(view2) + (1/3)*F

EP 2 658 267 A1

**Description**

Technical Field

This technology relates to a transmission device, a transmission method, a reception apparatus, and a reception method, and more particularly, to a transmission device that multiplexes and transmits a stream of each view in a multi-view service.

Background Art

In the related art, various multi-view services have been suggested. For example, the multi-view service includes a service of a stereoscopic image display. The stereoscopic image display includes, for example, a multi-viewpoint stereoscopic image display (refer to PTL 1) capable of stereoscopic viewing by the naked eye and a 3D stereoscopic image display (refer to PTL 2) that requires installation of special glasses such as shutter glasses. In addition, the multi-view service includes a service of simultaneously displaying multi-angle views, a service of providing views according to users, and the like.

Citation List

Patent Literature

PTL 1: Japanese Unexamined Patent Application Publication No. 2011-135458
PTL 2: Japanese Unexamined Patent Application Publication No. 2005-006114

Summary of Invention

Technical Problem

For the above-mentioned multi-view service, a plurality of view streams are multiplexed, and a multiplexed stream is transmitted from the transmission side to the reception side. The timing for decoding a stream and the timing for displaying a stream are generally controlled by a time stamp.
In a certain service, when a plurality of streams are supplied, and the streams are organically coupled to each other and reach a display, the decoding and the display timing of the plurality of streams having a reference relationship have to be controlled for each pixel so as not to be failed. In addition, in case of a live delivery, when multiplexing is performed in real time according to changes in the time, there is a need to perform the multiplexing by affixing time stamps to the plurality of streams, in accordance with a predetermined rule.
In a multi-view service, when each view is encoded by one stream, a multiplexing method of ensuring a decoding order and a reference relationship between the views, and a multiplexing method of controlling a display relationship between the views are required.
An object of this technology is to satisfactorily transmit a plurality of view streams for a multi-view service.

Solution to Problem

The concept of this technology is to provide a transmission device including: a transmission unit that transmits a multiplexed stream obtained by multiplexing a plurality of view streams; and a time stamp allocation unit that allocates decoding time stamps to the plurality of view streams at intervals in which a display period is subdivided.
In this technology, the multiplexed stream obtained by multiplexing the plurality of view streams is transmitted by the transmission unit. In this case, by the time stamp allocation unit, the decoding time stamps are allocated to the plurality of view streams at intervals in which the display period is subdivided.
For example, the plurality of view streams may be streams of a predetermined number of views that are selected from a plurality of views for a multi-viewpoint stereoscopic image display. In addition, for example, the plurality of view streams may be streams of two views for a 3D stereo stereoscopic image display. In addition, for example, the plurality of view streams may include streams of disparity information as additional view streams.
For example, the multiplexed stream may have an elementary stream including the plurality of view streams. In other words, the multiplexed stream includes either one of or both of an elementary stream including a plurality of view streams and an elementary stream including a single view stream. In the elementary stream including a plurality of view streams, for example, information indicating a boundary between views may be disposed between the view streams. In this case, it is possible to instantaneously access a leading head of each view stream.

In this manner, in this technology, the decoding time stamps are allocated to the plurality of view streams within the multiplexed stream at intervals in which the display period is subdivided. For this reason, since a decoding order and a reference relationship between views are ensured, it is possible to smoothly perform a decoding process on the reception side without a failure.

Meanwhile, in this technology, the transmission unit may transmit a container having a predetermined format which includes the multiplexed stream. The transmission device may further include an information insertion unit that inserts allocation information into a layer of the container, the allocation information indicating that the decoding time stamps are allocated to the plurality of view streams at intervals in which the display period is subdivided. For example, the container may be a transport stream, and the information insertion unit may insert the allocation information under a program map table. For example, the allocation information may include information indicating whether or not the corresponding elementary stream has a plurality of view streams.

In this case, the reception side can recognize that the decoding time stamps are allocated to the plurality of view streams at intervals in which the display period is subdivided, on the basis of the allocation information. Thereby, the reception side can rapidly move to a time stamp management through the decoding time stamp that is allocated to each of the view streams.

In addition, another concept of this technology is to provide a reception apparatus including: a reception unit that receives a multiplexed stream obtained by multiplexing a plurality of view streams; and a decoding unit that decodes the plurality of view streams within the multiplexed stream. Decoding time stamps are allocated to the plurality of view streams at intervals in which a display period is subdivided. The decoding unit sequentially decodes a plurality of view streams on the basis of the decoding time stamp that is allocated to each of the view streams.

In this technology, the multiplexed stream obtained by multiplexing the plurality of view streams is received by the reception unit. The plurality of view streams within the multiplexed stream are decoded by the decoding unit. Here, the decoding time stamps are allocated to the plurality of view streams at intervals in which the display period is subdivided. The decoding unit sequentially decodes the plurality of view streams on the basis of the decoding time stamp that is allocated to each of the view streams.

In this manner, in this technology, the plurality of view streams are sequentially decoded, on the basis of the decoding time stamp that is allocated to each of the view streams at intervals in which the display period is subdivided. For this reason, it is possible to smoothly perform a decoding process without a failure.

Meanwhile, in this technology, for example, the reception unit may receive a container having a predetermined format which includes the multiplexed stream. Allocation information may be inserted into a layer of the container, the allocation information indicating that the decoding time stamps are allocated to the plurality of view streams at intervals in which the display period is subdivided. When the allocation information is present, the decoding unit may sequentially decode the plurality of view streams on the basis of the decoding time stamp that is allocated to each of the view streams. In this case, the movement to a time stamp management is rapidly performed through the decoding time stamp that is allocated to each of the view streams, on the basis of the allocation information.

Advantageous Effects of Invention

According to this technology, it is possible to satisfactorily transmit a plurality of view streams for a multi-view service. Brief Description of Drawings

[Fig. 1] Fig. 1 is a block diagram showing a configuration example of an image transmission and reception system as an embodiment.

[Fig. 2] Fig. 2 is a diagram showing an example of view streams included in a transport stream TS.

[Fig. 3] Fig. 3 is a diagram showing a case where three view streams of a center (Center), a left end (Left), and a right end (Right) are included in the transport stream TS.

[Fig. 4] Fig. 4 is a diagram showing a case where one disparity data stream is included as an additional view stream, in addition to three view streams of a center (Center), a left end (Left), and a right end (Right) in the transport stream TS.

[Fig. 5] Fig. 5 is a diagram showing a case where two view streams of a left eye (Left) and a right eye (Right) are included in the transport stream TS.

[Fig. 6] Fig. 6 is a diagram showing pictures of each view that is displayed at each display timing, an arrangement position of the data (PES packet) within a multiplexed stream, and an example in which a DTS and a PTS are inserted into a header of each PES packet.

[Fig. 7] Fig. 7 is a diagram showing an example of decoding timings of pieces of picture data (PES packet) of views and display timings of pictures of the views, when a multiplexed stream is received.

[Fig. 8] Fig. 8 is a diagram showing a circuit example of multiplexing encoding on the transmission side (broadcasting station 100).

[Fig. 9] Fig. 9 is a diagram showing a configuration example of an elementary stream in case of 1-pid.

[Fig. 10] Fig. 10 is a diagram showing a circuit example of multiplexing decoding on the reception side (receiver 200), which corresponds to the circuit example of the multiplexing encoding.

[Fig. 11] Fig. 11 is a diagram showing a circuit example of multiplexing encoding on the transmission side (broadcasting station 100).

[Fig. 12] Fig. 12 is a diagram showing a configuration example of two elementary streams in case of 2-pid.

[Fig. 13] Fig. 13 is a diagram showing a circuit example of multiplexing decoding on the reception side (receiver 200), which corresponds to the circuit example of the multiplexing encoding.

[Fig. 14] Fig. 14 is a diagram showing an example of an elementary stream including a plurality of view streams.

[Fig. 15] Fig. 15 is a diagram showing an example of a case where three view streams are included in one elementary stream.

[Fig. 16] Fig. 16 is a diagram showing a structural example (Syntax) of a multiple stream descriptor (multiple_stream_ descriptor) as allocation information.

[Fig. 17] Fig. 17 is a diagram showing contents (Semantics) of main information in the structural example of the multiple stream descriptor.

[Fig. 18] Fig. 18 is a diagram showing a configuration example of the transport stream TS.

[Fig. 19] Fig. 19 is a diagram showing another configuration example of the transport stream TS.

[Fig. 20] Fig. 20 is a diagram shown another configuration example of the transport stream TS.

[Fig. 21] Fig. 21 is a block diagram showing a configuration example of a transmission data generation unit 110.

[Fig. 22] Fig. 22 is a block diagram showing a configuration example of the receiver 200.

[Fig. 23] Fig. 23 is a block diagram showing a configuration example of a transmission data generation unit 110A.

[Fig. 24] Fig. 24 is a block diagram showing a configuration example of a receiver 200A.

[Fig. 25] Fig. 25 is a block diagram showing a configuration example of a transmission data generation unit 110B.

[Fig. 26] Fig. 26 is a block diagram showing a configuration example of a receiver 200B.

Description of Embodiments

Hereinafter, a mode for carrying out the invention (hereinafter, referred to as "embodiment") will be described. Meanwhile, the description is performed in the following order.

1. Embodiment

2. Modified Example

<1. Embodiment>

[Image Transmission and Reception System]

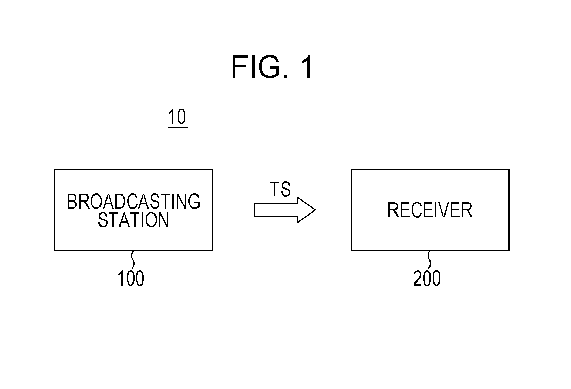

Fig. 1 shows a configuration example of an image transmission and reception system 10 as an embodiment. The image transmission and reception system 10 includes a broadcasting station 100 and a receiver 200. The broadcasting station 100 carries a transport stream TS as a container on an airwave and transmits the transport stream.

The transport stream TS includes a multiplexed stream obtained by multiplexing a plurality of view streams for a multi-view service. As mentioned above, the multi-view service includes a simultaneous display service of multi-angle views, a view providing service according to users, and the like, in addition to a stereoscopic image display service. However, herein, an example of the stereoscopic image display service will be described.

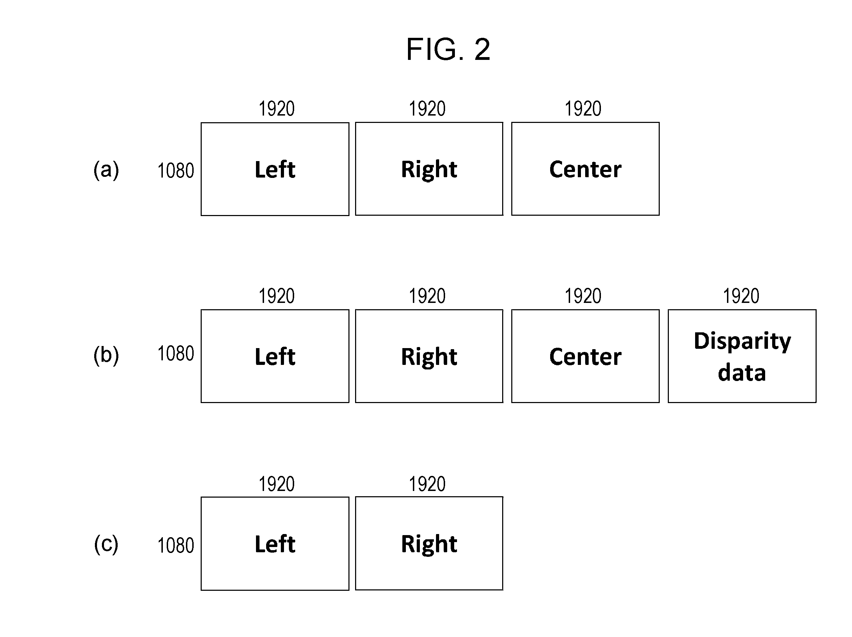

Fig. 2 shows an example of view streams included in the transport stream TS. In the example shown in Fig. 2, picture data of each view has a size of 1920x1080 full HD.

Fig. 2(a) shows an example of a multi-viewpoint stereoscopic image display service capable of stereoscopic viewing by the naked eye. In this case, the transport stream TS includes, for example, view streams (video streams) that are obtained by encoding image data of a center (Center) view, a left end (Left) view, and a right end (Right) view. In this case, there is a reference relationship (dependence relationship) between the view streams of the center (Center), the left end (Left), and the right end (Right).

Fig. 2(b) also shows an example of a multi-viewpoint stereoscopic image display service capable of stereoscopic viewing by the naked eye. In this case, in addition to the view streams of the center (Center), the left end (Left), and the right end (Right), a stream of disparity data is included. The disparity data stream is included as an additional view stream. In this case, there is a reference relationship (dependence relationship) between the center (Center) view stream, the left end (Left) view stream, the right end (Right) view stream, and the disparity data stream. Meanwhile, instead of the disparity data, depth data corresponding to the disparity data may be used.

Fig. 2(c) shows an example of a 3D stereoscopic image display that requires the installation of special glasses such as shutter glasses. In this case, view streams (video streams) are included which are obtained by encoding image data of a left eye (Left) view and a right eye (Right) view. In this case, there is a reference relationship (dependence relationship) between the view streams of the left eye (Left) and the right eye (Right).

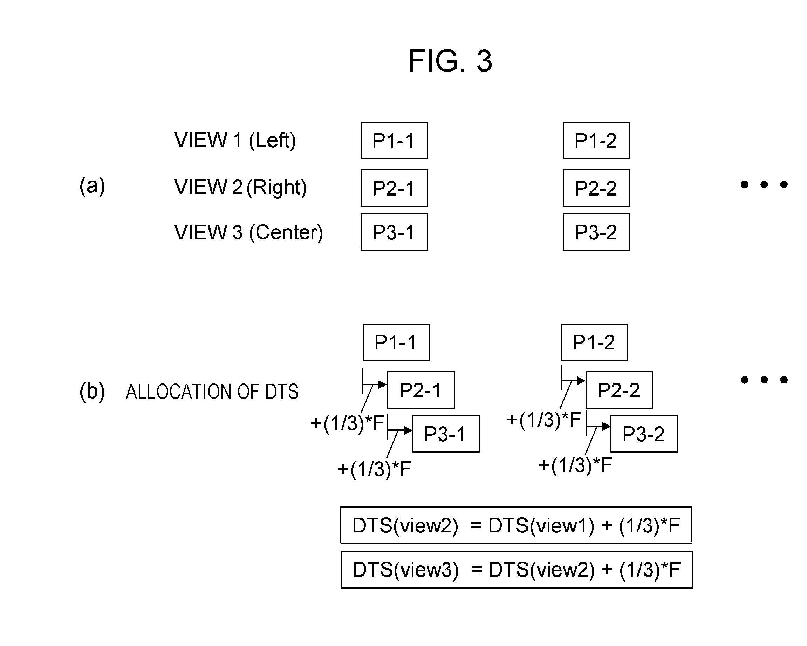

Decoding time stamps (DTS) are allocated to view streams included in the transport stream TS, at intervals in which a display period is subdivided. Fig. 3 shows a case where three view streams of the center (Center), the left end (Left), and the right end (Right) are included in the transport stream TS. Fig. 3(a) shows pictures of each view that is displayed at each display timing. Here, P1-1, P2-1, and P3-1 indicate pictures of views that are displayed at a certain display timing, and P1-2, P2-2, and P3-2 indicate pictures of the views that are displayed at the next timing.

As shown in Fig. 3(b), when a decoding time stamp that is allocated to a PES packet including picture data of a view 1 (for example, Left) is a DTS(view 1), a decoding time stamp DTS(view 2) that is allocated to a PES packet including picture data of view 2 (for example, Right) is a DTS obtained by adding an offset ((1/3)xF) of a fixed value to the DTS(view 1). Similarly, a decoding time stamp DTS(view 3) that is allocated to a PES packet including picture data of view 3 (for example, Center) is a DTS obtained by adding an offset ((1/3)xF) of a fixed value to the DTS(view 2). Here, F denotes a display period of the pictures.

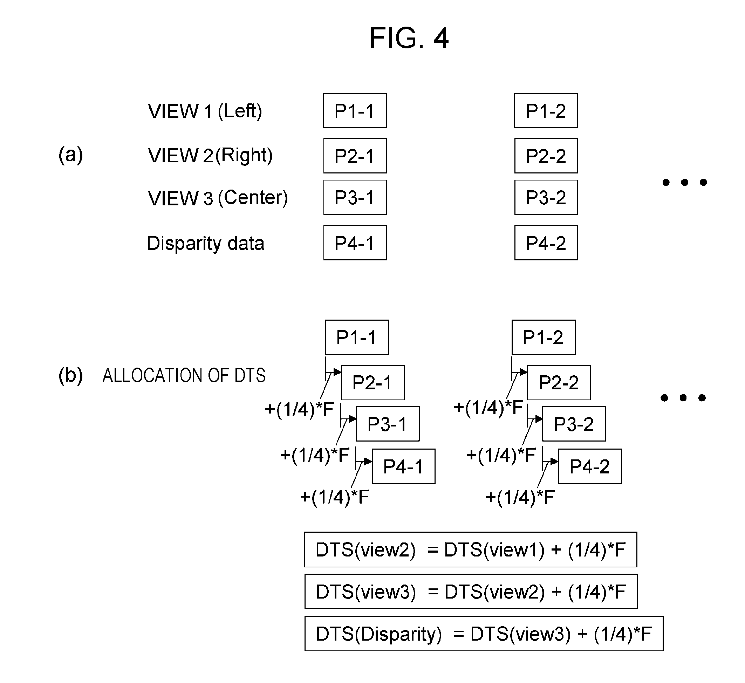

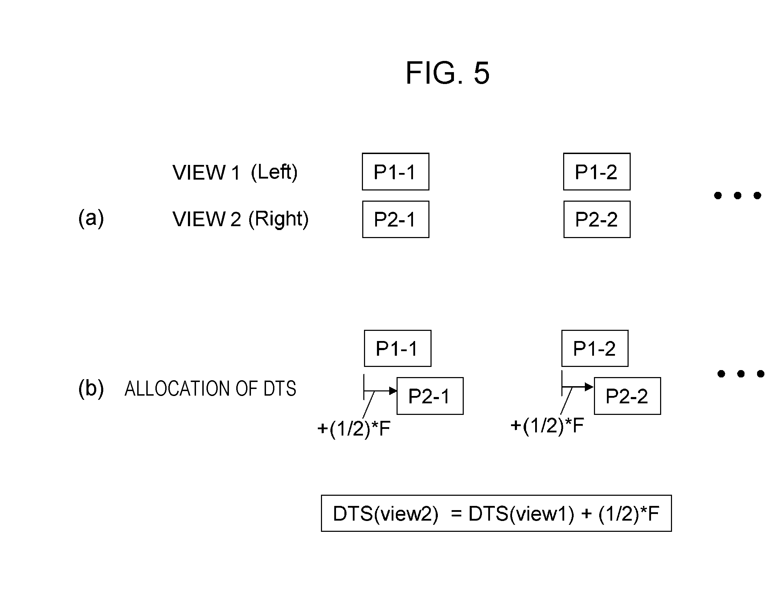

Here, as an expression of a general formulation, when the total number of views is N, the order of the views is K, and the display period is F, a DTS (view (K+1) ) can be expressed by Equation (1) below by using a DTS (view K) . This relationship can also be applied to examples of Fig. 4 and Fig. 5 to be described later.

$$\mathrm{DTS(view(K+1))=DTS(view\ K)+(1/3)\times F}\quad…\ (1)$$

Fig. 4 shows a case where one disparity data stream is included as an additional view stream in the transport stream TS, in addition  to the three view streams of the center (Center), the left end (Left), and the right end (Right). Fig. 4(a) shows pictures of each view that is displayed at each display timing. Here, P1-1, P2-1, P3-1, and P4-1 indicate pictures of the views that are displayed at a certain timing, and P1-2, P2-2, P3-2, and P4-2 indicate pictures of the views that are displayed at the next timing.

As shown in Fig. 4(b), when a decoding time stamp that is allocated to a PES packet including picture data of a view 1 (for example, Left) is a DTS(view 1), a decoding time stamp DTS(view 2) that is allocated to a PES packet including picture data of a view 2 (for example, Right) is a DTS obtained by adding an offset ((1/4)xF) of a fixed value to the DTS(view 1).

Similarly, a decoding time stamp DTS (view 3) that is allocated to a PES packet including picture data of a view 3 (for example, Center) is a DTS obtained by adding an offset ((1/4) xF) of a fixed value to the DTS (view 2) . Further, a decoding time stamp DTS (Disparity) that is allocated to a PES packet including disparity data is a DTS obtained by adding an offset ((1/4) xF) of a fixed value to the DTS (view 3) .

Fig. 5 shows a case where two view streams of a left eye (Left) and a right eye (Right) are included in the transport stream TS. Fig. 5(a) shows pictures of views that are displayed at each display timing. Here, P1-1 and P2-1 indicate pictures of the views that are displayed at a certain timing, and P1-2 and P2-2 indicate pictures of the views that are displayed at the next timing.

As shown in Fig. 5(b), when a decoding time stamp that is allocated to a PES packet including picture data of a view 1 (for example, Left) is a DTS(view 1), a decoding time stamp DTS(view 2) that is allocated to a PES packet including picture data of a view 2 (for example, Right) is a DTS obtained by adding an offset ((1/2)xF) of a fixed value to the DTS(view 1).

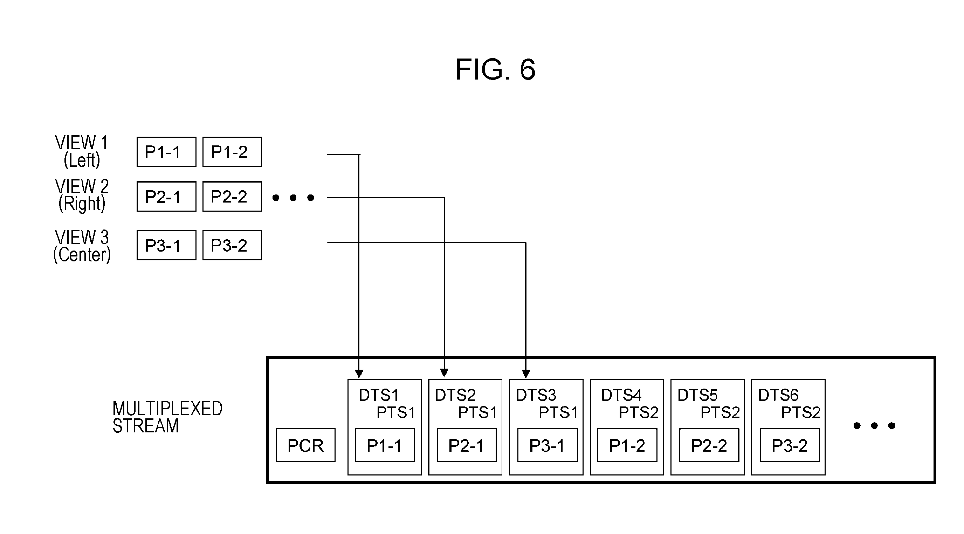

Fig. 6 shows pictures of each view that is displayed at each display timing, an arrangement position of the data (PES packet) within a multiplexed stream, and an example in which a DTS and a PTS  are inserted into a header of each PES packet. Meanwhile, the example shown in the drawing shows a case where three view streams of the center (Center), the left end (Left), and the right end (Right) are included in the transport stream TS.

First, as shown in the drawing, a PCR for delivering a clock on the encoder side to the decoder side is affixed. Meanwhile, data of the PCR may be transmitted separately from the data of the PES. Pieces of data (PES packet) are disposed within the multiplexed stream in the order of pictures of P1- 1, P2- 1, P3- 1, P1- 2, P2- 2, P3- 2, ....

In this case, the pictures of P1-1, P2-1, and P3-1 are displayed at the same display timing, and the same display time stamp PTS1 is inserted into a header of a PES packet including these pieces of data. However, with regard to the decoding time stamp, different time stamps of DTS1, DTS2, and DTS3 are inserted. The detailed description thereof will be omitted, but the same is true of the pictures of transitions of P1-2, P2-2, and P3-2.

As mentioned above, allocation information is inserted into a layer of the transport stream TS, that is, a layer of a container. The allocation information indicates that decoding time stamps are allocated to a plurality of view streams at intervals in which a display period is subdivided. For example, the allocation information is inserted under a video elementary loop (Video ES loop) of a program map table (PMT) that is included in the transport stream TS. On the reception side, it is possible to recognize that the decoding time stamps are allocated to the plurality of view streams at intervals in which the display period is subdivided, on the basis of the allocation information. Details of the allocation information will be described later.

Referring back to Fig. 1, the receiver 200 receives the transport stream TS that is carried on an airwave and transmitted from the broadcasting station 100. In addition, the receiver 200 decodes the view streams included in the transport stream TS to sequentially obtain picture data of each view, and uses the picture data for a stereoscopic image display (a multi-viewpoint stereoscopic image display or a 3D stereoscopic image display).

As mentioned above, the decoding time stamps are allocated to the view streams at intervals in which the display period is subdivided. For this reason, the receiver 200 sequentially decodes the view streams on the basis of the decoding time stamp that is allocated to each of the view streams.

As mentioned above, the allocation information is inserted into the layer of the transport stream TS. The receiver 200 can recognize that the decoding time stamps are allocated to the plurality of view streams at intervals in which the display period is subdivided, on the basis of the allocation information. Thereby, the receiver 200 can rapidly move to a time stamp management through the decoding time stamp that is allocated to each of the view streams.

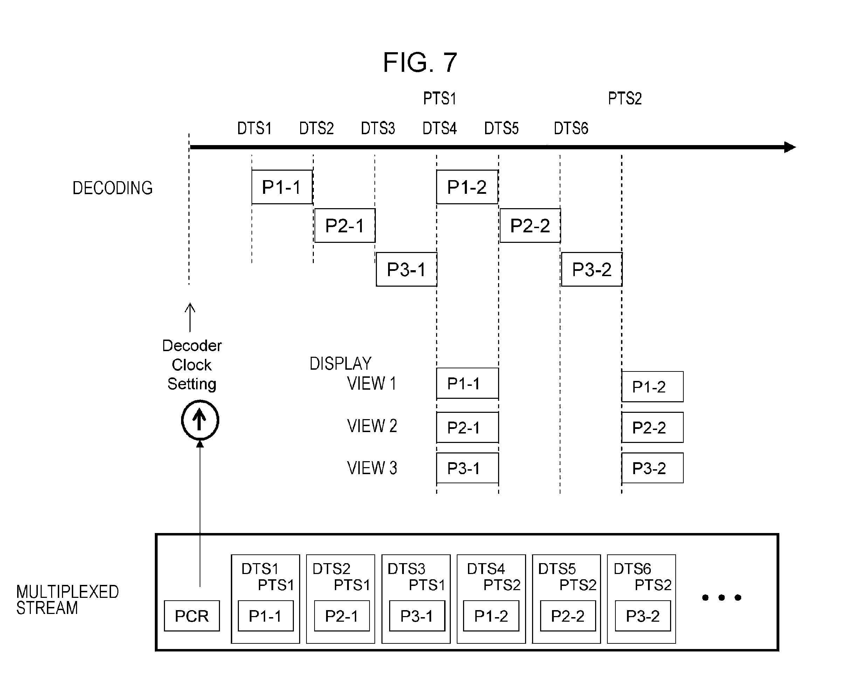

Fig. 7 shows an example of decoding timings of pieces of picture data (PES packets) of views and display timings of pictures of the views, when the multiplexed stream shown in Fig. 6 is received. As shown in the drawing, when a PCR is affixed, a decoder clock is set on the basis of the PCR.

Pieces of data (PES packets) are disposed within the multiplexed stream in the order of the pictures of P1-1, P2-1, P3-1, P1-2, P2-2, P3-2, .... With regard to the pictures of P1-1, P2-1, and P3-1, the pieces of data are decoded in sequence at timings of the decoding time stamps DTS1, DTS2, and DTS3 that are inserted into PES headers. The pictures are simultaneously displayed at the timing of the display time stamp PTS1 that is inserted into the PES header. The detailed description thereof will be omitted, but the same is true of the pictures of transitions of P1-2, P2-2, and P3-2.

The multiplexed stream includes either one of or both of an elementary stream including a plurality of view streams and an elementary stream including a single view stream. In other words, the multiplexed stream can have an elementary stream including a plurality of view streams.

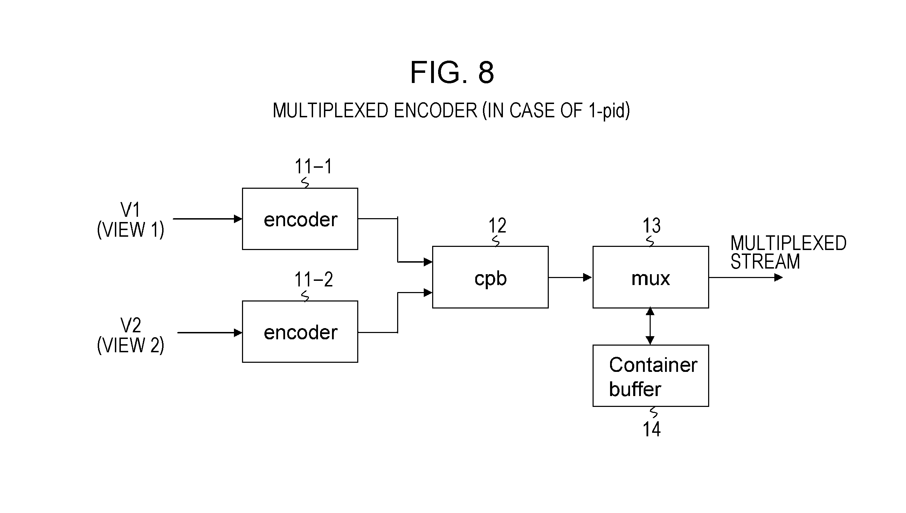

Fig. 8 shows a circuit example of multiplexing encoding on the transmission side (broadcasting station 100). This example shows a case where a single elementary stream included in the multiplexed stream includes two view streams of a view 1 and a view 2, that is, a case of 1-pid.

Image data V1 of the view 1 is encoded by an encoder 11-1, and the video stream after the encoding is temporarily stored in a cpb (coded picture buffer) buffer 12. In addition, image data V2 of the view 2 is encoded by an encoder 11-2, and the video stream after the encoding is temporarily stored in the cpb buffer 12.

The cpb buffer 12 is a buffer on the encoding side for defining buffering on the decoding side, which is related to a video. An amount of bits that are generated in the cpb buffer 12 is managed in the buffer on the decoding side so as not to be failed. The two video streams that are input to the cpb buffer 12 get out of the cpb buffer 12, as one elementary stream. The one elementary stream is temporarily stored in a container buffer 14, and is then included in and transmitted to the multiplexed stream by a multiplexer 13.

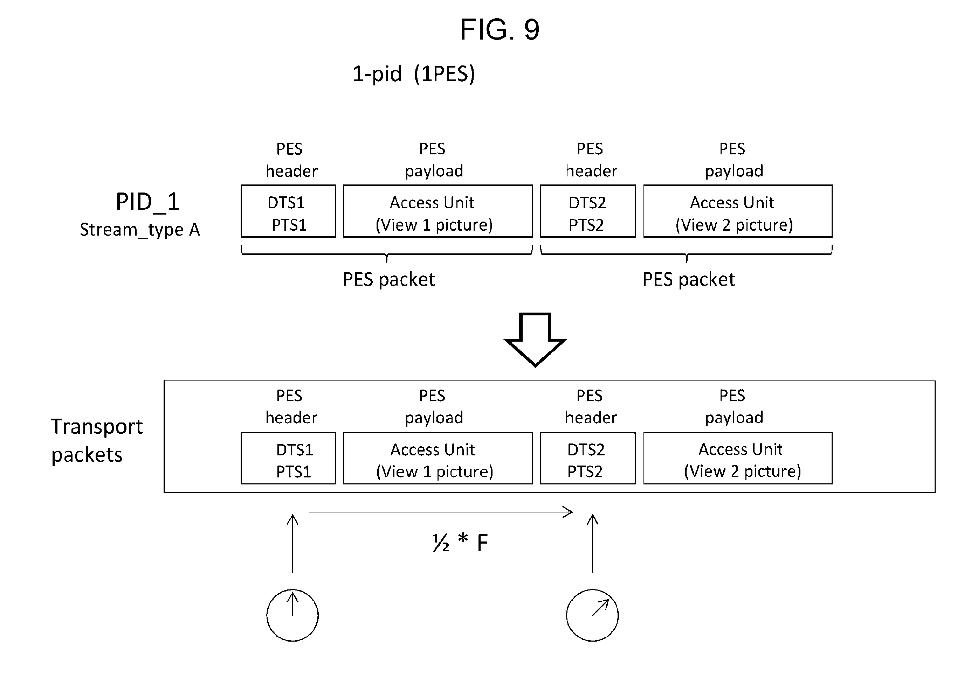

Fig. 9 shows a configuration example of an elementary stream in the case of 1-pid mentioned above. The one elementary stream includes two view streams of a view 1 and a view 2. In this case, a picture of each view serves as an access unit, and PES packets having the picture data in a payload portion thereof are sequentially continued. In this case, the relation of $DTS2=DTS1+(1/2)\times F$ is established, and thus it is possible to perform a multiplexing process while an access unit timing entering a multiplexing buffer does not stop a clock on the encoder side.

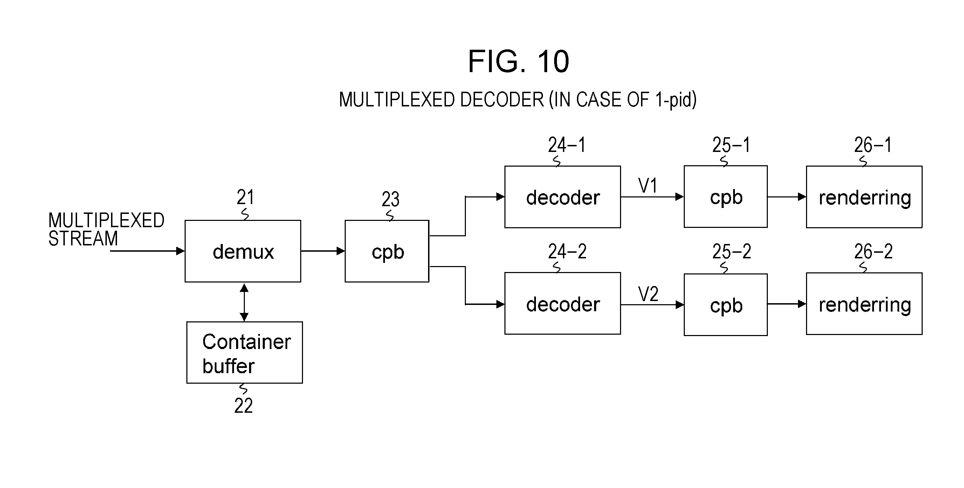

Fig. 10 shows a circuit example of multiplexing decoding on the reception side (receiver 200), which corresponds to the circuit example of the multiplexing encoding of Fig. 8. The multiplexed stream transmitted from the transmission side is temporarily stored in a container buffer 22. Then, one elementary stream is taken out by a demultiplexer 21, and is then temporarily stored in a cpb (coded picture buffer) buffer 23.

In the one elementary stream stored in the cpb buffer 23, picture data (access unit) of the view 1 is decoded by a decoder 24-1 in accordance with a timing of the corresponding DTS. Then, image data V1 of the view 1 is obtained and is temporarily stored in a dpb (decoded picture buffer) buffer 25-1.

In addition, in the one elementary stream stored in the cpb buffer 23, picture data (access unit) of the view 2 is decoded by a decoder 24-2 in accordance with a timing of the corresponding DTS. Then, image data V2 of the view 2 is obtained and is temporarily stored in a dpb buffer 25-2. A display using the image data V1 and V2 is performed by rendering units 26-1 and 26-2 at a timing of the PTS.

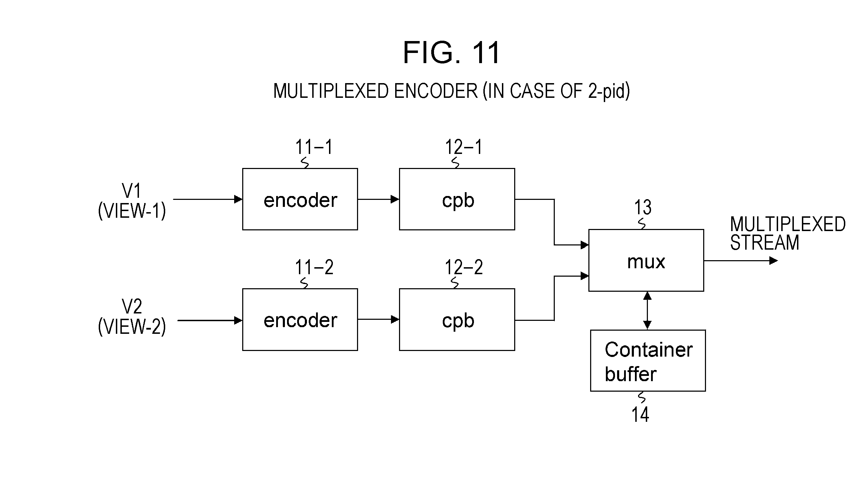

Fig. 11 shows a circuit example of multiplexing encoding on the transmission side (broadcasting station 100). This example shows a case where view streams of the view 1 and the view 2 are respectively included in two elementary streams included in the multiplexed stream, that is, a case of 2-pid.

The image data V1 of the view 1 is encoded by the encoder 11-1, and the video stream after the encoding is temporarily stored in a cpb (coded picture buffer) buffer 12-1. In addition, the image data V2 of the view 2 is encoded by the encoder 11-2, and the video stream after the encoding is temporarily stored in a cpb buffer 12-2.

The cpb buffers 12-1 and 12-2 are buffers on the encoding side for defining buffering on the decoding side, which is related to a video. An amount of bits that are generated in the cpb buffers 12-1 and 12-2 is managed in the buffer on the decoding side so as not to be failed. Video streams that are respectively input to the cpb buffers 12-1 and 12-2 get out of the cpb buffers 12-1 and 12-2, as one elementary stream. The two elementary streams are temporarily stored in the container buffer 14, and is then included in and transmitted to the multiplexed stream by the multiplexer 13.

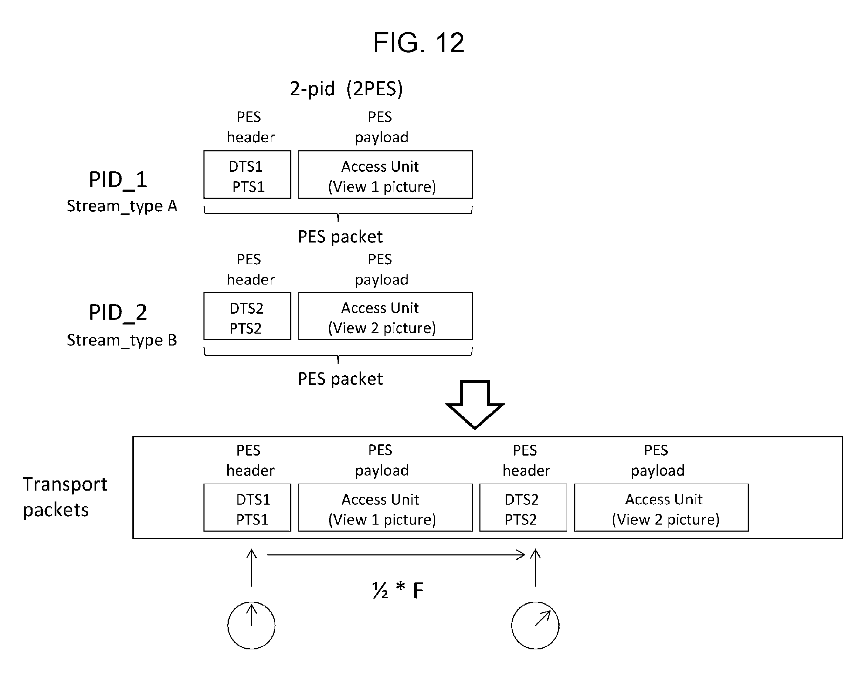

Fig. 12 shows a configuration example of two elementary streams in the case of 2-pid mentioned above. A first elementary stream includes view streams of a view 1. In this case, pictures of the view 1 serve as access units, and PES packets having the picture data in a payload portion thereof are present. A second elementary stream includes view streams of a view 2. In this case, pictures of the view 2 serve as access units, and PES packets having the picture data in a payload portion thereof are present.

In this case, the relation of DTS2=DTS1+(1/2)×F is established, and thus it is possible to perform a multiplexing process while an access unit timing entering a multiplexing buffer does not stop a clock on the encoder side. A relation between two PES packets is written in a stream type (Stream_type).

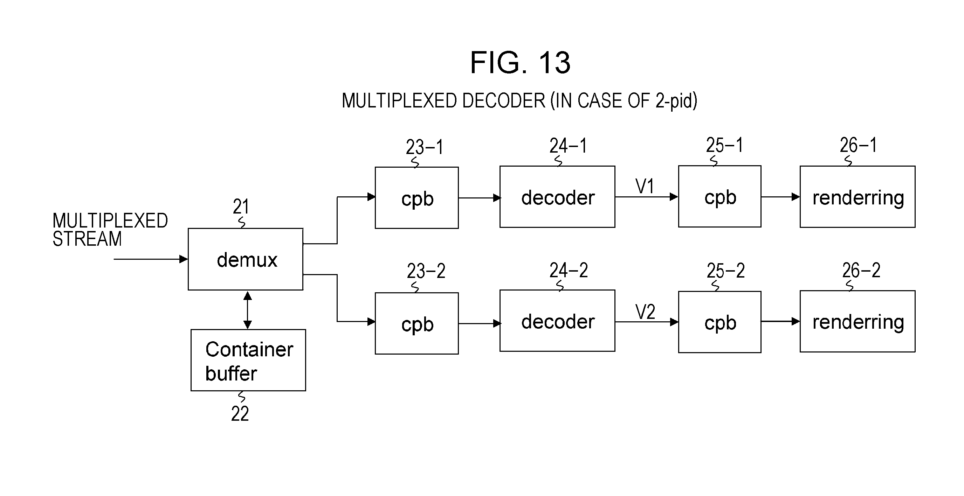

Fig. 13 shows a circuit example of multiplexing decoding on the reception side (receiver 200), which corresponds to the circuit example of the multiplexing encoding of Fig. 11. A multiplexed stream that is transmitted from the transmission side is temporarily stored in the container buffer 22. Then, the first and second elementary streams are extracted by the demultiplexer 21, and are temporarily stored in cpb (coded picture buffer) buffers 23-1 and 23-2, respectively.

Picture data (access unit) of a view 1 included in the elementary stream that is stored in the cpb buffer 23-1 is decoded by the decoder 24-1 in accordance with a timing of the corresponding DTS. Then, image data V1 of the view 1 is obtained and is temporarily stored in the dpb (decoded picture buffer) buffer 25-1.

In addition, picture data (access unit) of the view 1 included in the elementary stream that is stored in the cpb buffer 23-2 is decoded by the decoder 24-2 in accordance with a timing of the corresponding DTS. Then, image data V2 of the view 2 is obtained and is temporarily stored in a dpb (decoded picture buffer) buffer 25-3. A display using the image data V1 and V2 is performed by the rendering units 26-1 and 26-2 at a timing of PTS.

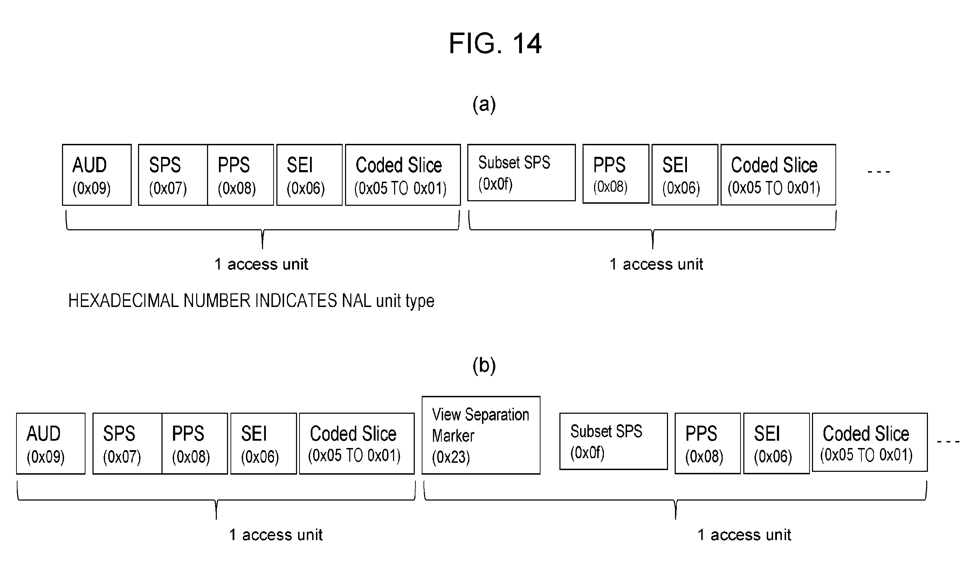

Figs. 14(a) and 14(b) show an example of an elementary stream including a plurality of view streams. Pieces of encoded data of pictures of each view are sequentially disposed in each access unit. In this case, encoded data of a first picture is constituted by "SPS to Coded Slice", and encoded data of each of second-to-last pictures are constituted by "Subset SPS to Coded Slice". Meanwhile, this example is an example in which encoding of MPEG4-AVC is performed, but any of other encoding methods can also be applied thereto. Meanwhile, a hexadecimal number in the drawing indicates "NAL unit type".

When one elementary stream includes a plurality of view streams, there is a need to be capable of instantaneously recognizing a boundary between the view streams. Therefore, as shown in Fig. 14(b), it is considered that a new "NALunit" indicating a boundary between views of "View Separation Marker" is defined and disposed between the pieces of encoded data of each picture. Thereby, it is possible to instantaneously access leading data of each view stream. Meanwhile, Fig. 14(a) shows an example in which "View Separation Marker" is not disposed between the view streams.

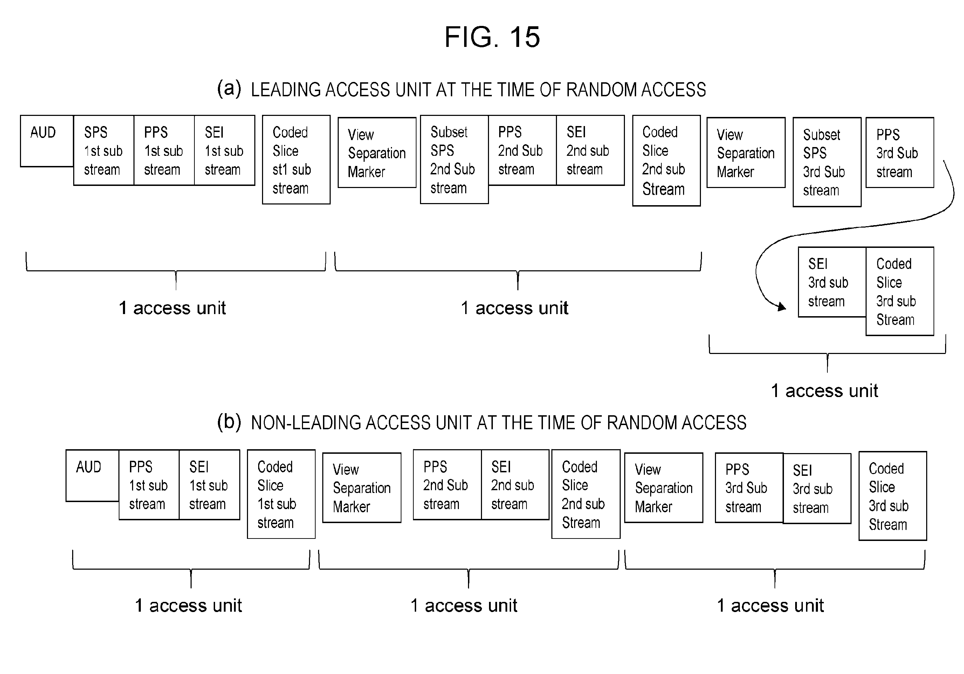

Figs. 15(a) and 15(b) show an example in which three view streams are included in one elementary stream. Herein, pieces of encoded data of pictures of each view are shown as sub streams. Fig. 15(a) shows a leading access unit at the time of random access, and Fig. 15(b) shows a non-leading access unit at the time of random access.

[Structure of Allocation Information and TS configuration]

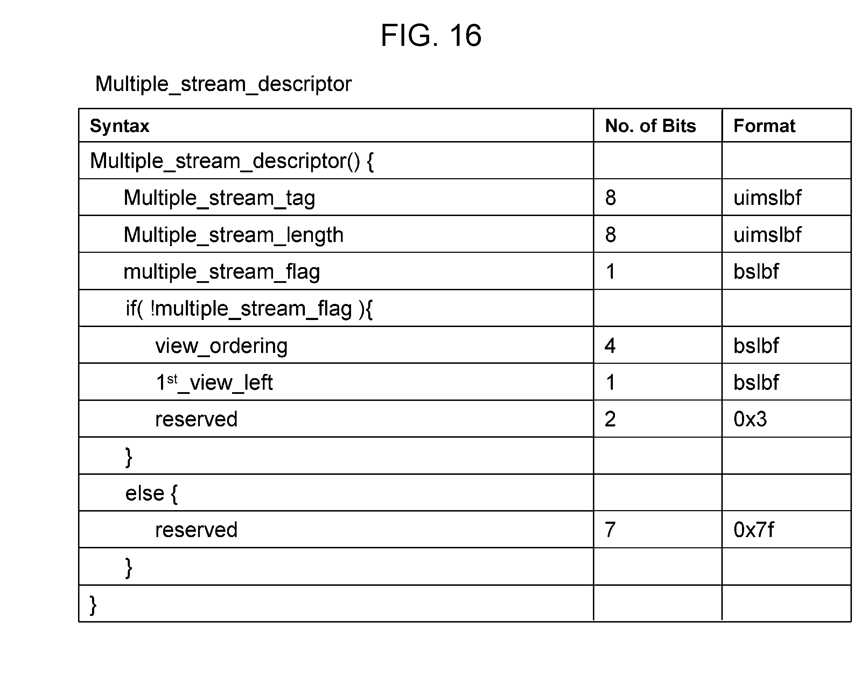

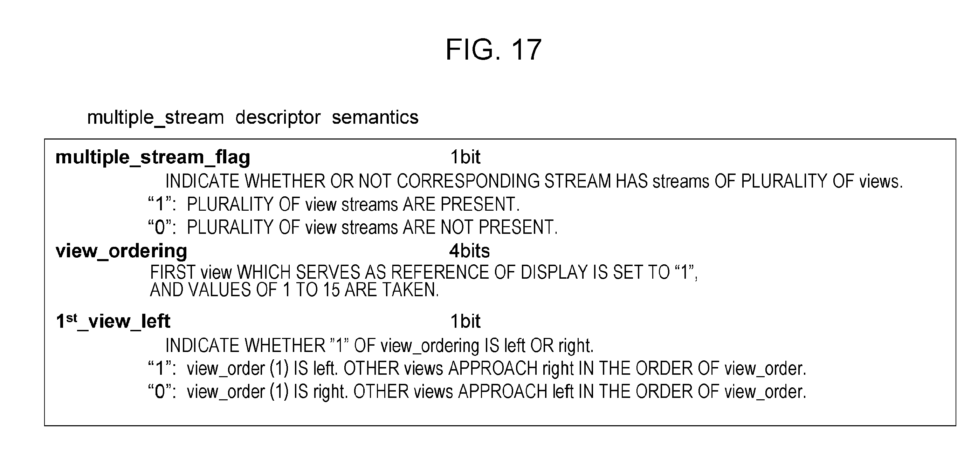

As mentioned above, allocation information is inserted into a layer of a transport stream TS. The allocation information indicates that decoding time stamps are allocated to a plurality of view streams at intervals in which a display period is subdivided. Fig. 16 shows a structural example (Syntax) of a multiple stream descriptor (multiple_stream_descriptor) as the allocation information. In addition, Fig. 17 shows contents (Semantics) of main information in the structural example shown in Fig. 16.

"multiple_stream_tag" is 8 bits of data indicating a descriptor type, and here, indicates a multiple stream descriptor. "multiple_stream_length" is 8 bits of data indicating the length (size) of a descriptor. This data indicates the subsequent number of bytes as the length of the descriptor.

A 1-bit field of "multiple_stream_flag" indicates whether or not the corresponding stream has a plurality of view streams. "1" indicates that a plurality of view streams are present, and "0" indicates that a plurality of view streams are not present. In case of "multiple_stream_flag=1", information such as "view ordering" and "1st_view_left" are further present. In a 4-bit field of "view ordering", a first view which serves as a reference of a display is set to "1", and values of 1 to 15 are taken.

A 1-bit field of "1st_view_left" indicates whether "1" of "view_ordering" is "left" or "right". "1" indicates that view_ordering (1) is "left". Other views approach right in the order of view_ordering. "0" indicates that view_ordering (1) is "right", other views approach left in the order of view_ordering.

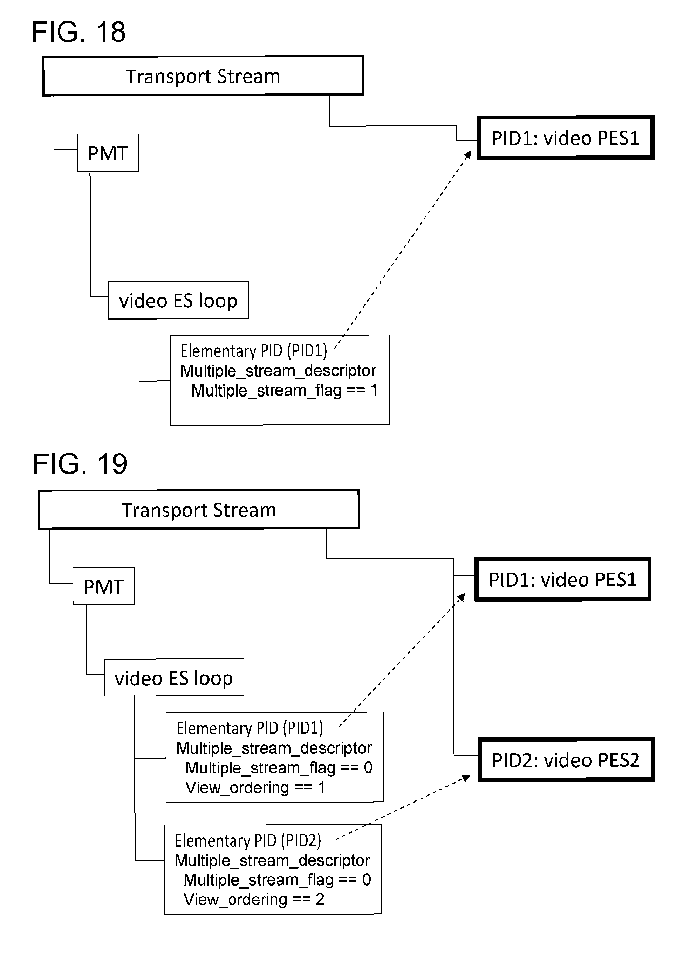

Fig. 18 shows a configuration example of a transport stream TS. Meanwhile, in the configuration example, an audio and the like are not shown in the drawing for the purpose of simplifying the drawing. This configuration example shows a case where the transport stream TS has one elementary stream including a plurality of view streams. In the configuration example of Fig. 18, a PES packet "video PES1" of one elementary stream is included.

In addition, the transport stream TS includes a PMT (Program Map Table) as PSI (Program Specific Information). The PMT has an elementary loop having information related to each elementary stream. In this configuration example, a video elementary loop (Video ES loop) is present. In the elementary loop, information such as a packet identifier (PID) is disposed in each stream, and a descriptor for describing information related to the elementary stream is also disposed in each stream.

In this configuration example, a multiple stream descriptor (multiple_stream_descriptor) is inserted under a video elementary loop (Video ES loop) of a PMT, in relation to each video stream. In this descriptor, the relation of "multiple_stream_flag=1" is established, and it is indicated that the corresponding stream has a plurality of view streams.

Fig. 19 shows another configuration example of the transport stream TS. Meanwhile, in this configuration example, an audio and the like are not shown in the drawing for the purpose of simplifying the drawing. This configuration example shows a case where the transport stream TS has two elementary streams each including one view stream. In the configuration example of Fig. 19, PES packets "video PES1" and "video PES2" of two elementary streams are included.

In addition, in this configuration example, a multiple stream descriptor (multiple_stream_descriptor) is inserted under a video elementary loop (Video ES loop) of a PMT, in relation to each elementary stream. In a descriptor corresponding to the PES packet "videoPES1", the relation of "multiple_stream_flag=0" is established, and it is indicated that the corresponding stream does not have a plurality of view streams. In addition, in this descriptor, the relation of "view_ordering=1" is established, and it is indicated that the view is a view serving as a reference of a display.

In addition, in a descriptor corresponding to the PES packet "video PES2", the relation of "multiple_stream_flag=0" is established, and it is indicated that the corresponding stream does not have a plurality of view streams. In addition, in this descriptor, the relation of "view_ordering=2" is established, and it is indicated that the view is a second view adjacent to the view serving as a reference of a display.

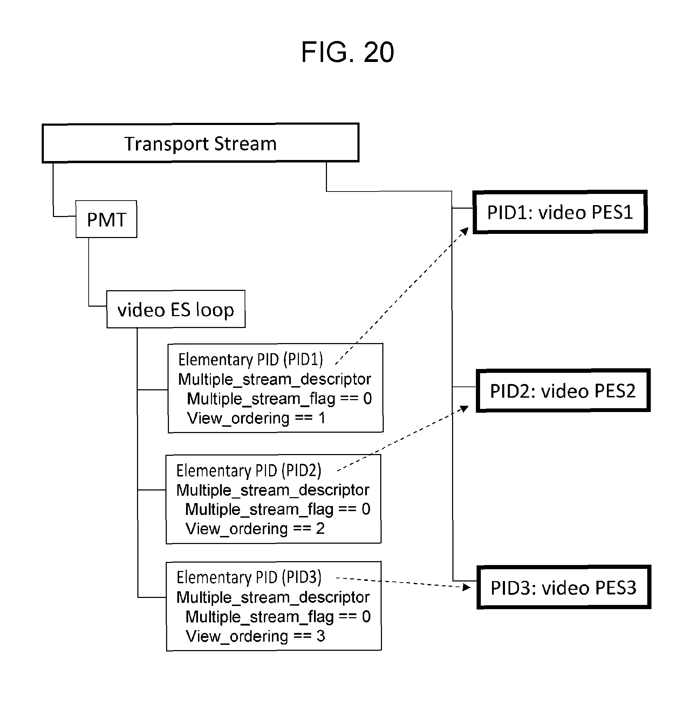

Fig. 20 shows another configuration example of the transport stream TS. Meanwhile, in this configuration example, an audio and the like are not shown in the drawing for the purpose of simplifying the drawing. This configuration example shows a case where the transport stream TS has three elementary streams each including one view stream. The configuration example of Fig. 20 includes PES packets "video PES1", "video PES2", and "video PES3" of three elementary streams.

In addition, in this configuration example, a multiple stream descriptor (multiple_stream_descriptor) is inserted under a video elementary loop (Video ES loop) of a PMT, in relation to each elementary stream. In a descriptor corresponding to the PES packet "videoPES1", the relation of "multiple_stream_flag=0" is established, and it is indicated that the corresponding stream does not have a plurality of view streams. In addition, in this descriptor, the relation of "view_ordering=1" is established, and it is indicated that the view is a view serving as a reference of a display.

In addition, in a descriptor corresponding to the PES packet "video PES2", the relation of "multiple_stream_flag=0" is established, and it is indicated that the corresponding stream does not have a plurality of view streams. In addition, in this descriptor, the relation of "view_ordering=2" is established, and it is indicated that the view is a second view adjacent to the view serving as a reference of a display. In addition, in a descriptor corresponding to the PES packet "video PES3", the relation of "multiple_stream_flag=0" is established, and it is indicated that the corresponding stream does not have a plurality of view streams. In addition, in this descriptor, the relation of "view_ordering=3" is established, and it is indicated that the view is a third view adjacent to the second view.

[Configuration Examples of Receiver and Transmission Data Generation Unit]

A configuration example of the transmission data generation unit 110 of the broadcasting station 100 and a configuration example of the receiver 200 will be described.

"Configuration Example of Transmission Data Generation Unit"

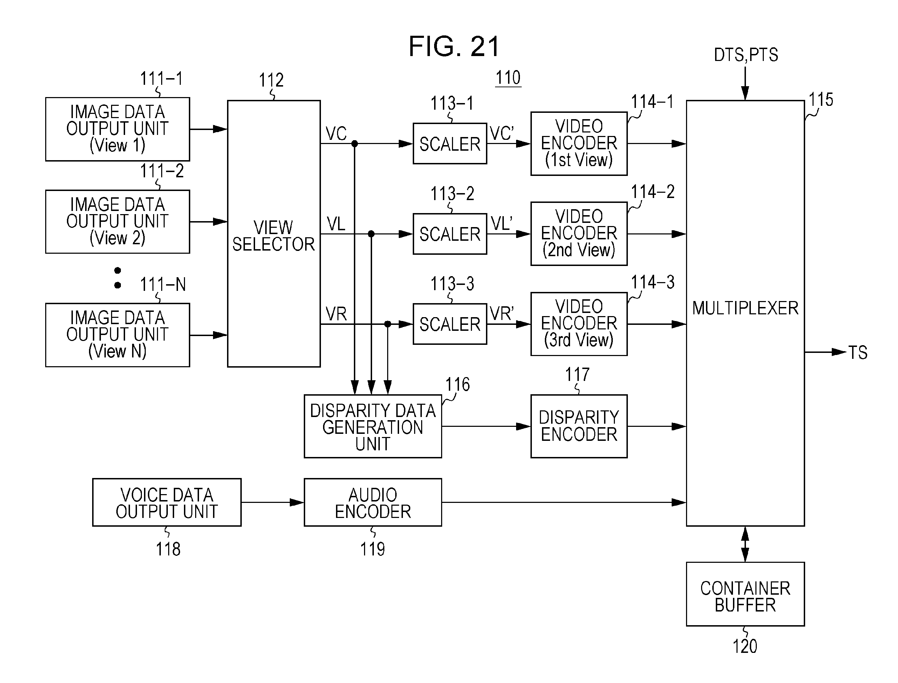

Fig. 21 shows a configuration example of the transmission data generation unit 110. The transmission data generation unit 110 has N image data output units 111-1 to 111-N, a view selector 112, scalers 113-1, 113-2, and 113-3, video encoders 114-1, 114-2, and 114-3, a multiplexer 115, and a container buffer 120. In addition, the transmission data generation unit 110 has a disparity data generation unit 116, a disparity encoder 117, a voice data output unit 118, and an audio encoder 119.

The image data output units 111-1 to 111-N output image data of N views (View 1 ... View N) for a multi-viewpoint stereoscopic image display. The image data output unit is constituted by a camera that captures an image of an object and outputs image data, an image data reading out unit that reads out image data from a storage (storage medium) and outputs the image data, or the like. Meanwhile, image data of a view that is not transmitted may not be actually present.

In addition, the view selector 112 selectively takes out at least image data of a left end view and a right end view, and image data of a center view (one, or two or more) that is located between the left end view and the right end view, from the image data of N views (View 1 ... View N). In this embodiment, the view selector 112 takes out image data VL of the left end view and image data VR of the right end view, and also takes out image data VC of the center view.

In addition, the scalers 113-1, 113-2, and 113-3 perform a scaling process on the pieces of image data VC, VL, and VR, respectively, and thus pieces of image data VC', VL', and VR' having a size of, for example, 1920x1080 full HD are obtained. In this case, when the pieces of image data VC, VL, and VR have a size of 1920x1080 full HD, the pieces of image data are output without any change. In addition, when the pieces of image data VC, VL, and VR have a size larger than 1920x1080, the pieces of image data are scaled down and output.

The video encoder 114-1 performs encoding, for example, MPEG4-AVC (MVC) or MPEG2video, on the image data VC' of the center view to obtain encoded video data. The video encoder 114-1 generates a view stream including the encoded data using a stream formatter (not shown) that is included in a back part thereof.

In addition, the video encoder 114-2 performs encoding, for example, MPEG4-AVC (MVC) or MPEG2video, on the image data VL' of the left end view to obtain encoded video data. The video encoder 114-2 generates a view stream including the encoded data using a stream formatter (not shown) that is included in a back part thereof.

Further, the video encoder 114- 3 performs encoding, for example, MPEG4- AVC (MVC) or MPEG2video, on the image data VR' of the right end view to obtain encoded video data. The video encoder 114- 3 generates a view stream including the encoded data using a stream formatter (not shown) that is included in a back part thereof.

The disparity data generation unit 116 generates disparity data on the basis of the pieces of image data of the center view, the left end view, and the right end view which are output from the view selector 112. For example, the disparity data includes disparity data between the center view and the left end view, and disparity data between the center view and the right end view. In this case, the disparity data is generated in pixel units or block units.

The disparity encoder 117 performs encoding on the disparity data generated by the disparity data generation unit 116 to generate a disparity data stream. The disparity data stream includes disparity data in pixel units or block units. When the disparity data is included in pixel units, the disparity data can be compressively encoded and transmitted, similar to pixel data.

Meanwhile, when the disparity data stream includes the disparity data in block units, the above- mentioned conversion process is performed on the reception side, and thus it is also possible to convert the disparity data in block units into the disparity data in pixel units. In addition, when the disparity data stream is not transmitted, it is possible to obtain the disparity data in block units between the views, as mentioned above, and to convert the disparity data in block units into the disparity data in pixel units on the reception side.

The voice data output unit 118 outputs voice data corresponding to image data. The voice data output unit 118 is constituted by, for example, a microphone or a voice data reading out unit that reads out voice data from a storage medium and outputs the voice data. The audio encoder 119 performs encoding such as MPEG-2Audio or AAC on the voice data that is output from the voice data output unit 118 to generate an audio stream.

The container buffer 120 temporarily stores each stream after the encoding. The multiplexer 115 packetizes and multiplexes the streams that are generated by the video encoders 114-1, 114-2, and 114-3, the disparity data encoder 117, and the audio encoder 119 to generate a multiplexed stream. In this case, a DTS (Decoding Time Stamp) and a PTS (Presentation Time Stamp) are inserted into a header of each PES (Packetized Elementary Stream) for synchronous reproduction on the reception side.

The multiplexer 115 inserts a multiple stream descriptor (multiple_stream_descriptor) (see Fig. 16) as allocation information into a layer of a transport stream TS. The descriptor has information indicating that decoding time stamps are allocated to a plurality of view streams at intervals in which a display period is subdivided. For example, the descriptor is inserted under a program map table (PMT) that is included in the transport stream TS.

Operations of the transmission data generation unit 110 shown in Fig. 21 will be briefly described. Pieces of image data of N views (View 1 ... View N) for a multi-viewpoint stereoscopic image display which are output from the N image data output units 111-1 to 111-N are supplied to the view selector 112. In the view selector 112, the image data VC of the center view, the image data VL of the left end view, and the image data VR of the right end view are taken out from the pieces of image data of the N views.

The image data VC of the center view which is taken out by the view selector 112 is supplied to the scaler 113-1, and a scaling process into a size of, for example, 1920x1080 full HD is performed. The image data VC' after the scaling process is supplied to the video encoder 114-1. The video encoder 114-1 performs encoding on the image data VC' to obtain encoded video data, and thus a view stream including the encoded video data is obtained. The view stream is supplied to the container buffer 120 and is temporarily stored.

In addition, the image data VL of the left end view which is taken out by the view selector 112 is supplied to the scaler 113-2, and a scaling process into a size of, for example, 1920x1080 full HD is performed. The image data VL' after the scaling process is supplied to the video encoder 114-2. The video encoder 114-2 performs encoding on the image data VL' to obtain encoded video data, and a view stream including the encoded video data is generated. The view stream is supplied to the container buffer 120 and is temporarily stored.

Further, the image data VR of the right end view which is taken out by the view selector 112 is supplied to the scaler 113- 3, and a scaling process into a size of, for example, 1920x1080 full HD is performed. The image data VR' after the scaling process is supplied to the video encoder 114- 3. The video encoder 114- 3 performs encoding on the image data VR' to obtain encoded video data, and a view stream including the encoded video data is generated. The view stream is supplied to the container buffer 120 and is temporarily stored.

In addition, the pieces of image data of the center view, the left end view, and the right end view which are output from the view selector 112 are supplied to the disparity data generation unit 116. The disparity data generation unit 116 generates disparity data, on the basis of the pieces of image data of the views. The disparity data includes disparity data between the center view and the left end view and disparity data between the center view and the right end view. In this case, the disparity data is generated in pixel units or block units.

The disparity data generated by the disparity data generation unit 116 is supplied to the disparity encoder 117. The disparity encoder 117 performs an encoding process on the disparity data to generate a disparity data stream. The disparity data stream is supplied to the container buffer 120 and is temporarily stored.

In addition, the voice data that is output from the voice data output unit 118 is supplied to the audio encoder 119. The audio encoder 119 performs encoding such as MPEG-2Audio or AAC on the voice data, and thus an audio stream is generated. The audio stream is supplied to the container buffer 120 and is temporarily stored.

The multiplexer 115 packetizes and multiplexes the streams from the encoders which are stored in the container buffer 120, and thus a transport stream TS is generated. In this case, a DTS and a PTS are inserted into a header of each PES for synchronous reproduction on the reception side. In addition, the multiplexer 115 inserts a multiple stream descriptor, for example, under a PMT. The multiple stream descriptor is allocation information indicating that decoding time stamps are allocated to a plurality of view streams at intervals in which a display period is subdivided.

"Configuration Example of Receiver"

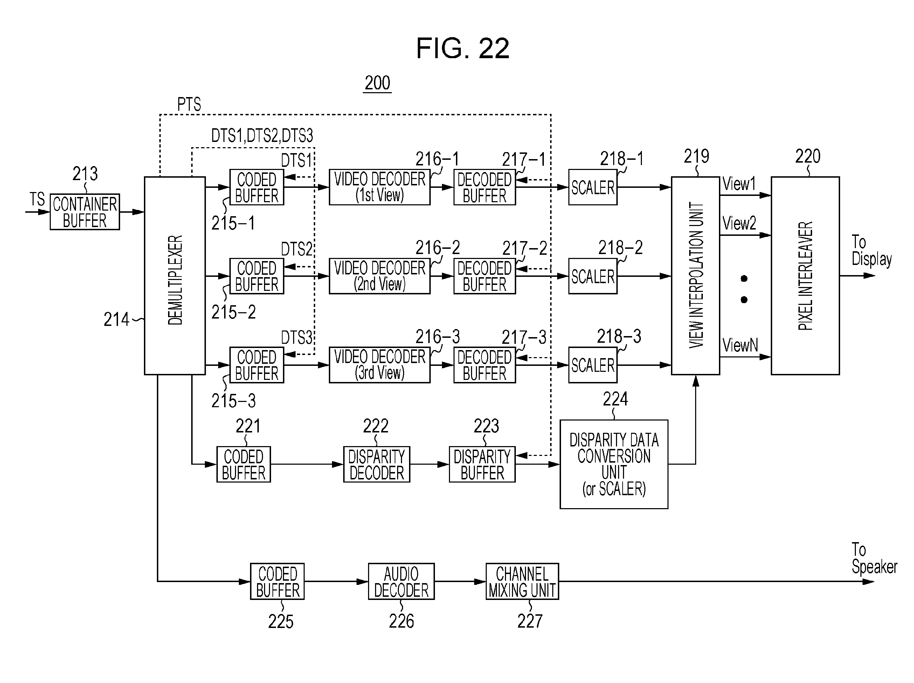

Fig. 22 shows a configuration example of the receiver 200 which corresponds to the above-mentioned transmission data generation unit 110 shown in Fig. 21. The receiver 200 includes a container buffer 213, a demultiplexer 214, coded buffers 215-1, 215-2, and 215-3, video decoders 216-1, 216-2, and 216-3, decoded buffers 217-1, 217-2, and 217-3, and scalers 218-1, 218-2, and 218-3.

In addition, the receiver 200 includes a view interpolation unit 219 and a pixel interleaver 220. The receiver 200 further includes a coded buffer 221, a disparity decoder 222, a disparity buffer 223, and a disparity data conversion unit 224. In addition, the receiver 200 includes a coded buffer 225, an audio decoder 226, and a channel mixing unit 227.

The container buffer 213 temporarily stores a transport stream TS that is received using a digital tuner or the like. The transport stream TS includes a view stream that is obtained by encoding at least image data of a left end view and a right end view, and image data of a center view as a view that is located between the left end and the right end, in a plurality of views for a multi-viewpoint stereoscopic image display.

As mentioned above, in the transport stream TS, a multiple stream descriptor, which is allocation information, is inserted under a PMT. The descriptor indicates that decoding time stamps are allocated to a plurality of view streams at intervals in which a display period is subdivided.

The demultiplexer 214 extracts streams of a video, a disparity, and an audio from the transport stream TS that is temporarily accumulated in the container buffer 213. In addition, the demultiplexer 214 extracts the above-mentioned multiple stream descriptor from the transport stream TS and transmits the multiple stream descriptor to a control unit (CPU) not shown in the drawing.

The control unit can recognize, using the descriptor, that the decoding time stamps are allocated to the plurality of view streams at intervals in which the display period is subdivided. Thereby, the receiver 200 can rapidly move to a time stamp management through the decoding time stamp that is allocated to each of the view streams.

The coded buffers 215-1, 215-2, and 215-3 temporarily store the view streams of the center view, the left end view, and the right end view which are extracted by the demultiplexer 214, respectively. The video decoders 216-1, 216-2, and 216-3 perform a decoding process on the view streams that are stored in the coded buffers 215-1, 215-2, and 215-3, respectively, to obtain pieces of image data of the center view, the left end view, and the right end view.

The above-mentioned demultiplexer 214 extracts a DTS and a PTS that are allocated to each of the view streams (including disparity data streams) of each view. The extraction of the view streams of each view from the coded buffers 215-1, 215-2, and 215-3 is performed at a timing of the corresponding DTS. Therefore, the decoding process with respect to the view streams of each view starts at a timing of the corresponding DTS.

Here, the video decoder 216- 1 obtains image data of a center view (center view) . In addition, the video decoder 216- 2 obtains image data of a left end view (left view) . Further, the video decoder 216- 3 obtains image data of a right end view (right view) .

The decoded buffers 217-1, 217-2, and 217-3 temporarily store the pieces of image data of the views which are respectively obtained by the video decoders 216-1, 216-2, and 216-3. The scalers 218-1, 218-2, and 218-3 are adjusted so that an output resolution of each of the pieces of image data of the views which are output from the decoded buffers 217-1, 217-2, and 217-3, respectively, becomes a predetermined resolution.

The coded buffer 221 temporarily stores the disparity data stream that is extracted by the demultiplexer 214. The disparity decoder 222 performs a process that is opposite to the disparity encoder 117 (see Fig. 21) of the above-mentioned transmission data generation unit 110. In other words, the disparity decoder 222 performs a decoding process of the disparity data stream that is stored in the coded buffer 221 to obtain disparity data.

The disparity data includes disparity data between the center view and the left end view, and disparity data between the center view and the right end view. In addition, the disparity data is disparity data in pixel units or block units. The disparity buffer 223 temporarily stores the disparity data that is obtained by the disparity decoder 222.

Here, the extraction of the disparity data stream from the coded buffer 221 is performed at a timing of the corresponding DTS that is extracted by the demultiplexer 214. Therefore, the decoding process with respect to the disparity data stream starts at a timing of the corresponding DTS.

The disparity data conversion unit 224 generates disparity data in pixel units according to the size of the image data after the scaling, on the basis of the disparity data accumulated in the disparity buffer 223. For example, when the generated disparity data is disparity data in block units, the disparity data is converted into disparity data in pixel units. In addition, for example, when the generated disparity data is disparity data in pixel units, but does not conform to the size of the image data after the scaling, the disparity data is appropriately scaled.

The view interpolation unit 219 interpolates and synthesizes pieces of image data of a predetermined number of views which are not transmitted from the pieces of image data of the center view, the left end view, and the right end view after the scaling, on the basis of the disparity data between the views which are obtained by the disparity data conversion unit 224. In other words, the view interpolation unit 219 interpolates and synthesizes the pieces of image data of each view that is located between the center view and the left end view and outputs the pieces of image data. In addition, the view interpolation unit 219 interpolates and synthesizes the pieces of image data of each view that is located between the center view and the right end view, and outputs the image data.

The pixel interleaver 220 performs a pixel interleaving process on pieces of image data of N views (View 1, View 2, ..., View N) which are output from the view interpolation unit 219 to generate display image data for watching a three-dimensional image (stereoscopic image) by the naked eye.

The coded buffer 225 temporarily stores an audio stream that is extracted by the demultiplexer 214. The audio decoder 226 performs a process that is opposite to the audio encoder 119 (see Fig. 21) of the above-mentioned transmission data generation unit 110. In other words, the audio decoder 226 performs a decoding process of the audio stream that is stored in the coded buffer 225 to obtain the decoded voice data. The channel mixing unit 227 generates voice data of each channel for realizing, for example, 5.1 ch surround with respect to the voice data that is obtained by the audio decoder 226, and outputs the generated voice data.

Meanwhile, the reading out of the pieces of image data of each view from the decoded buffers 217- 1, 217- 2, and 217- 3 and the reading out of the disparity data from the disparity buffer 223 are performed on the basis of the PTS, and thus transport synchronization is taken.

Operations of the receiver 200 will be briefly described. A transport stream TS that is received using a digital tuner or the like is temporarily stored in the container buffer 213. The transport stream TS includes a view stream that is obtained by encoding image data of a left end view and a right end view, and image data of a center view as a view that is located between the left end and the right end, in a plurality of views for a multi-viewpoint stereoscopic image display.

The demultiplexer 214 extracts streams of a video, a disparity, and an audio from the transport stream TS that is temporarily stored in the container buffer 213. In addition, the demultiplexer 214 extracts a multiple stream descriptor as allocation information from the transport stream TS, and transmits the multiple stream descriptor to a control unit (CPU). The control unit recognizes, using the descriptor, that decoding time stamps are allocated to a plurality of view streams at intervals in which a display period is subdivided. The control unit can rapidly move to a time stamp management through the decoding time stamp that is allocated to each of the view streams.

The view streams of the center view, the left end view, and the right end view which are extracted by the demultiplexer 214 are supplied to the coded buffers 215-1, 215-2, and 215-3, respectively, and are temporarily stored. The video decoders 216-1, 216-2, and 216-3 perform a decoding process of the view streams that are stored in the coded buffers 215-1, 215-2, and 215-3, and thus the pieces of image data of the center view, the left end view, and the right end view are obtained.

The pieces of image data of each view which are obtained by the video decoders 216-1, 216-2, and 216-3 are supplied to the decoded buffers 217-1, 217-2, and 217-3, respectively, and are temporarily stored. The scalers 218-1, 218-2, and 218-3 are adjusted so that an output resolution of each of the pieces of image data of the views which are output from the decoded buffers 217-1, 217-2, and 217-3 becomes a predetermined resolution.

In addition, the disparity data stream that is extracted by the demultiplexer 214 is supplied to the coded buffer 221 and is temporarily stored. The disparity decoder 222 performs a decoding process of the disparity data stream that is stored in the coded buffer 221 to obtain disparity data. The disparity data includes disparity data between the center view and the left end view, and disparity data between the center view and the right end view. In addition, the disparity data is disparity data in pixel units or block units.

The disparity data that is obtained by the disparity decoder 222 is supplied to the disparity buffer 223 and is temporarily stored. The disparity data conversion unit 224 generates disparity data in pixel units according to the size of the image data after the scaling, on the basis of the disparity data accumulated in the disparity buffer 223. In this case, when the generated disparity data is disparity data in block units, the disparity data is converted into disparity data in pixel units. In addition, in this case, when the generated disparity data is disparity data in pixel units, but does not conform to the size of the image data after the scaling, the disparity data is appropriately scaled.

The view interpolation unit 219 interpolates and synthesizes pieces of image data of a predetermined number of views which are not transmitted from the pieces of image data of the center view, the left end view, and the right end view after the scaling, on the basis of the disparity data between the views which are obtained by the disparity data conversion unit 224. Pieces of image data of N views (View 1, View 2, ..., View N) for watching a three-dimensional image (stereoscopic image) by the naked eye are obtained by the view interpolation unit 219. Meanwhile, the pieces of image data of the center view, the left end view, and the right end view are also included.

The pixel interleaver 220 performs a pixel interleaving process on the pieces of image data of the N views (View 1, View 2, ..., View N) to generate display image data for watching a three-dimensional image (stereoscopic image) by the naked eye. The display image data is supplied to a display, and thus an image display for naked-eye watching of a three-dimensional image (stereoscopic image) is performed.

In addition, the audio stream that is extracted by the demultiplexer 214 is supplied to the coded buffer 225 and is temporarily stored. The audio decoder 226 performs a decoding process of the audio stream stored in the coded buffer 225, and thus decoded voice data is obtained. The voice data is supplied to the channel mixing unit 227. The channel mixing unit 227 generates voice data of each channel for realizing, for example, 5.1 ch surround, with respect to the voice data. The voice data is supplied to, for example, a speaker, and thus a voice output according to the image display is performed.

[Other Configuration Examples of Transmission Data Generation unit and Receiver]

The above-mentioned transmission data generation unit 110 shown in Fig. 21 and the above-mentioned receiver 200 shown in Fig. 22 are configuration examples in a case where the disparity data stream obtained by encoding the disparity data is included in the transport stream TS. A case where the disparity data stream is not included in the transport stream TS is also considered.

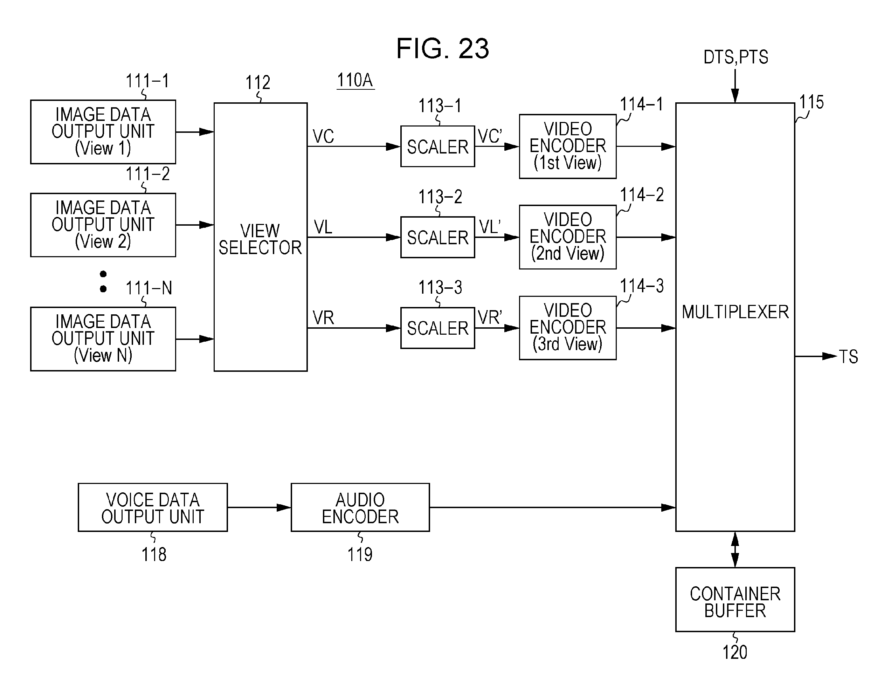

Fig. 23 shows a configuration example of a transmission data generation unit 110A in that case. In Fig. 23, the same reference numerals and signs are assigned to components corresponding to those in Fig. 21, and the detailed description thereof will be omitted. The transmission data generation unit 110A does not include the disparity data generation unit 116 and the disparity encoder 117 of the transmission data generation unit 110 shown in Fig. 21. In this case, the multiplexer 115 packetizes and multiplexes the streams that are generated by the video encoders 114-1, 114-2, and 114-3 and the audio encoder 119 to generate a multiplexed stream. Other configurations in the transmission data generation unit 110A shown in Fig. 23 are the same as those in the transmission data generation unit 110 shown in Fig. 21.

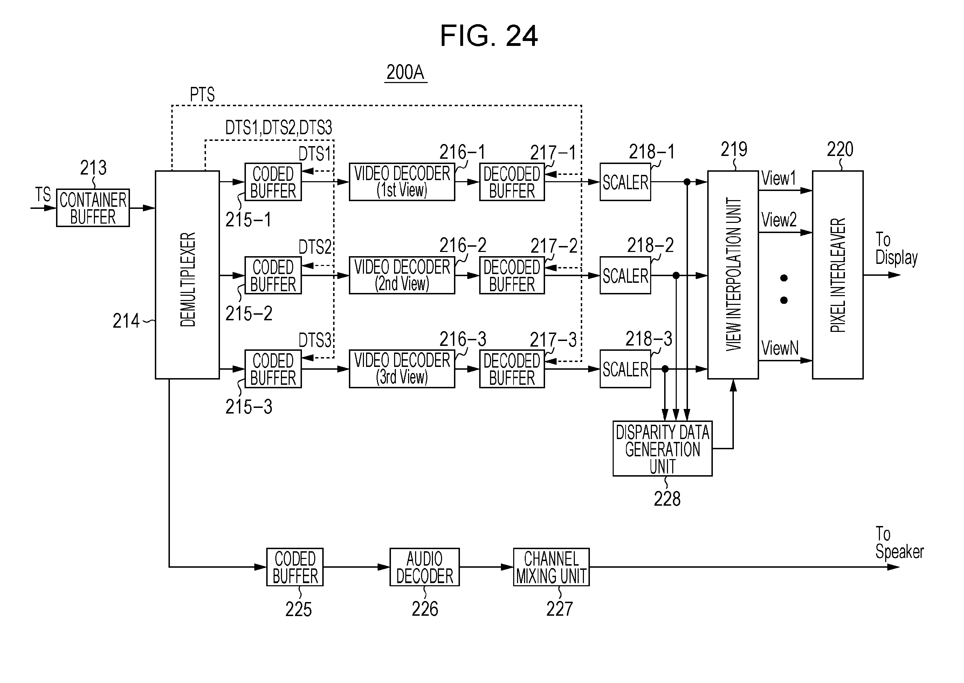

In addition, Fig. 24 shows a configuration example of a receiver 200A in that case. In Fig. 24, the same reference numerals and signs are assigned to components corresponding to those in Fig. 22, and the detailed description thereof will be omitted. The receiver 200A includes a disparity data generation unit 228. The disparity data generation unit 228 generates disparity data on the basis of pieces of image data of a center view, a left end view, and a right end view after a scaling process.

A detailed description will be omitted, but a disparity data generation method in this case is the same as the disparity data generation method in the disparity data generation unit 116 of the above-mentioned transmission data generation unit 110 (see Fig. 21). Meanwhile, the disparity data generation unit 228 generates and outputs the same disparity data as the disparity data in pixel units which is generated by the disparity data conversion unit 224 of the receiver 200 shown in Fig. 22. The disparity data that is generated by the disparity data generation unit 228 is supplied to the view interpolation unit 219.

Meanwhile, in the receiver 200A shown in Fig. 24, the coded buffer 221, the disparity decoder 222, the disparity buffer 223, and the disparity data conversion unit 224 of the receiver 200 shown in Fig. 22 will be omitted. Other configurations of the receiver 200A shown in Fig. 24 are the same as those in the receiver 200 shown in Fig. 22.

[Still Other Configuration Examples of Transmission Data Generation Unit and Receiver]

The above-mentioned transmission data generation units 110 and 110A shown in Figs. 21 and 23 and the above-mentioned receivers 200 and 200A shown in Figs. 22 and 24 are configuration examples in a case where view streams for a multi-viewpoint stereoscopic image display are included in a transport stream TS. A description will be given of a configuration example in a case where view streams for a 3D stereoscopic image display are included in the transport stream TS.

[Configuration Example of Transmission Data Generation Unit]

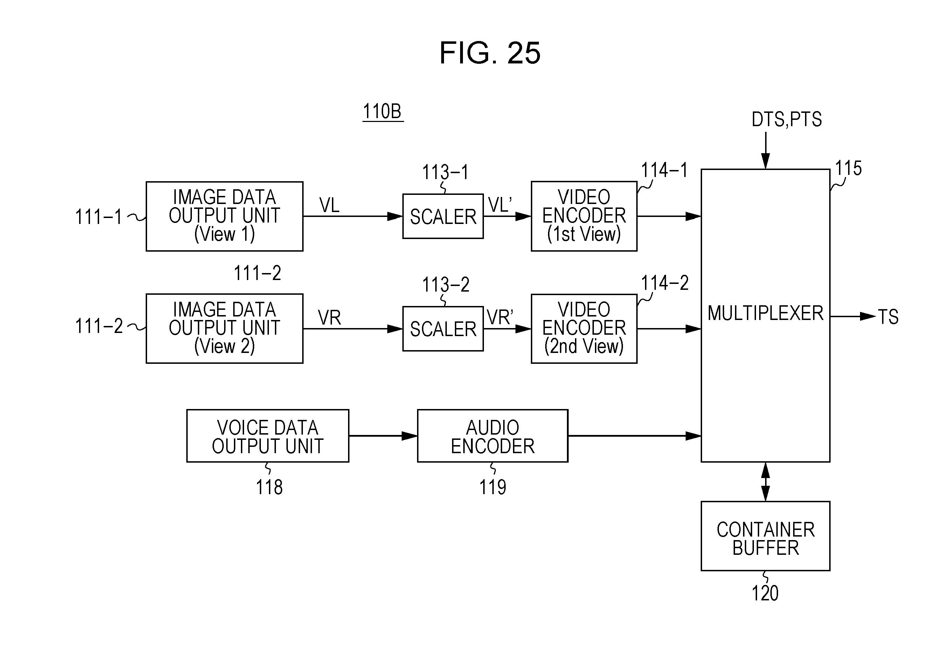

Fig. 25 shows a configuration example of a transmission data generation unit 110B in that case. In Fig. 25, the same reference numerals and signs are assigned to components corresponding to those in Fig. 21. The transmission data generation unit 110B includes two image data output units 111-1 and 111-2, the scalers 113-1 and 113-2, the video encoders 114-1 and 114-2, the multiplexer 115, and the container buffer 120. In addition, the transmission data generation unit 110B includes the voice data output unit 118 and the audio encoder 119.

The image data output units 111-1 and 111-2 respectively output left eye (View 1) image data VL and right eye (View 2) image data VR for a 3D stereoscopic image display. The image data output unit is constituted by, for example, a camera that captures an image of an object and outputs image data, an image data reading out unit that reads out image data from a storage (storage medium) and outputs the image data, or the like.

In addition, the scalers 113-1 and 113-2 perform a scaling process on the pieces of image data VL and VR, respectively, to obtain pieces of image data VL' and VR' having a size of, for example, 1920x1080 full HD. In this case, when the pieces of image data VL' and VR' have a size of 1920x1080 full HD, the pieces of image data are output without any change. In addition, when the pieces of image data VL and VR have a size larger than 1920x1080, the pieces of image data are scaled down and output.

The video encoder 114-1 performs encoding, for example, MPEG4-AVC (MVC) or MPEG2video, on the left eye image data VL' to obtain encoded video data. The video encoder 114-1 generates a view stream including the encoded data using a stream formatter (not shown) that is included in a back part thereof.

In addition, the video encoder 114-2 performs encoding, for example, MPEG4-AVC (MVC) or MPEG2video, on the right eye image data VR' to obtain encoded video data. The video encoder 114-2 generates a view stream including the encoded data using a stream formatter (not shown) that is included in a back part thereof.

The voice data output unit 118 outputs voice data corresponding to image data. The voice data output unit 118 is constituted by, for example, a microphone or a voice data reading out unit that reads out voice data from a storage medium and outputs the voice data. The audio encoder 119 performs encoding such as MPEG-2Audio or AAC on the voice data that is output from the voice data output unit 118 to generate an audio stream.

The container buffer 120 temporarily stores each stream after the encoding. The multiplexer 115 packetizes and multiplexes the streams that are generated by the video encoders 114-1 and 114-2 and the audio encoder 119 to generate a transport stream TS including the multiplexed streams. In this case, a DTS (Decoding Time Stamp) and a PTS (Presentation Time Stamp) are inserted into a header of each PES (Packetized Elementary Stream) for synchronous reproduction on the reception side.

The multiplexer 115 inserts a multiple stream descriptor (multiple_stream_descriptor) (see Fig. 16) as allocation information into a layer of the transport stream TS. The descriptor has information indicating that decoding time stamps are allocated to a plurality of view streams at intervals in which a display period is subdivided. For example, the descriptor is inserted under a program map table (PMT) that is included in the transport stream TS.

Operations of the transmission data generation unit 110B shown in Fig. 25 will be briefly described. The left eye image data VL and the right eye image data VR for a 3D stereoscopic image display which are output from two image data output units 111-1 and 111-2 are supplied to the scalers 113-1 and 113-2, and a scaling process into a size of, for example, 1920x1080 full HD is performed.

The image data VL' after the scaling process is supplied to the video encoder 114-1. The video encoder 114-1 performs encoding on the image data VL' to obtain encoded video data, and thus a view stream including the encoded video data is generated. The view stream is supplied to the container buffer 120 and is temporarily stored.

In addition, the image data VR' after the scaling process is supplied to the video encoder 114-2. The video encoder 114-2 performs encoding on the image data VR' to obtain encoded video data, and a view stream including the encoded video data is generated. The view stream is supplied to the container buffer 120 and is temporarily stored.

In addition, the voice data that is output from the voice data output unit 118 is supplied to the audio encoder 119. The audio encoder 119 performs encoding such as MPEG-2Audio or AAC on the voice data to generate an audio stream. The audio stream is supplied to the container buffer 120 and is temporarily stored.

The multiplexer 115 packetizes and multiplexes streams from each of the encoder stored in the container buffer 120 to generate a transport stream TS. In this case, a DTS and a PTS are inserted into each PES header for synchronous reproduction on the reception side. In addition, the multiplexer 115 inserts a multiple stream descriptor under a PMT. The multiple stream descriptor is allocation information indicating that decoding time stamps are allocated to a plurality of view streams at intervals in which a display period is subdivided.

"Configuration Example of Receiver"

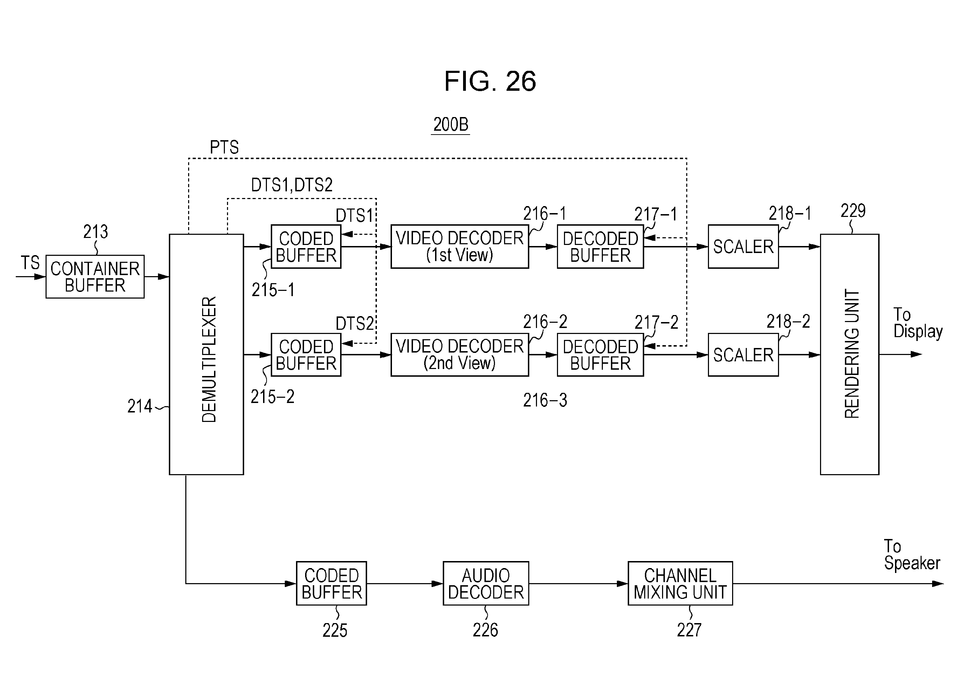

Fig. 26 shows a configuration example of a receiver 200B corresponding to the above-described transmission data generation unit 110B shown in Fig. 25. The receiver 200B includes the container buffer 213, the demultiplexer 214, the coded buffers 215-1 and 215-2, the video decoders 216-1 and 216-2, the decoded buffers 217-1 and 217-2, the scalers 218-1 and 218-2, and the rendering unit 229. In addition, the receiver 200B includes the coded buffer 225, the audio decoder 226, and the channel mixing unit 227.

The container buffer 213 temporarily stores the transport stream TS that is received using a digital tuner or the like. The transport stream TS includes view streams obtained by encoding pieces of image data of the left eye and the right eye for a 3D stereoscopic image display.

As mentioned above, a multiple stream descriptor which is allocation information is inserted under a PMT of the transport stream TS. The descriptor indicates that decoding time stamps are allocated to a plurality of view streams at intervals in which a display period is subdivided.

The demultiplexer 214 extracts streams of a video and an audio from the transport stream TS that is temporarily stored in the container buffer 213. In addition, the demultiplexer 214 extracts the above-mentioned multiple stream descriptor from the transport stream TS and transmits the multiple stream descriptor to a control unit (CPU) not shown in the drawing.

The control unit can recognize, using the descriptor, that the decoding time stamps are allocated to the plurality of view streams at intervals in which the display period is subdivided. Thereby, the receiver 200 can rapidly move to a time stamp management through the decoding time stamp that is allocated to each of the view streams.

The coded buffers 215-1 and 215-2 temporarily store the view streams of the left eye view and the right eye view which are extracted by the demultiplexer 214, respectively. The video decoders 216-1 and 216-2 perform a decoding process on the view streams that are stored in the coded buffers 215-1 and 215-2, respectively, to obtain the left eye image data and the right eye image data.

The above-mentioned demultiplexer 214 extracts a DTS and a PTS that are allocated to each of the view streams of each view. The extraction of the view streams of each view from the coded buffers 215-1 and 215-2 is performed at a timing of the corresponding DTS. Therefore, the decoding process with respect to the view streams of each view starts at a timing of the corresponding DTS. Here, the video decoder 216-1 obtains the left eye image data, and the video decoder 216-2 obtains the right eye image data.

The decoded buffers 217-1 and 217-2 temporarily store the pieces of image data of the left eye and the right eye which are obtained by the video decoders 216-1 and 216-2, respectively. The scalers 218-1 and 218-2 are adjusted so that an output resolution of each of the pieces of image data of the left eye and the right eye which are output from the decoded buffers 217-1 and 217-2, respectively, becomes a predetermined resolution. The rendering unit 229 performs a process for a 3D stereoscopic image display on the pieces of image data of the left eye and the right eye, and supplies the image data to a display.

The coded buffer 225 temporarily stores the audio stream that is extracted by the demultiplexer 214. The audio decoder 226 performs a process that is opposite to the audio encoder 119 (see Fig. 25) of the above-mentioned transmission data generation unit 110B. In other words, the audio decoder 226 performs a decoding process of the audio stream that is stored in the coded buffer 225 to obtain decoded voice data. The channel mixing unit 227 generates voice data of each channel for realizing, for example, 5.1 ch surround, with respect to the voice data that is obtained by the audio decoder 226, and outputs the generated voice data.

Meanwhile, the reading out of the pieces of image data of each view from the decoded buffers 217-1 and 217-2 is performed on the basis of the PTS, and thus transport synchronization is taken.

Operations of the receiver 200B will be briefly described. The transport stream TS that is received using a digital tuner or the like is temporarily stored in the container buffer 213. The transport stream TS includes a view stream that is obtained by encoding left eye image data and right eye image data for a 3D stereoscopic image display.

The demultiplexer 214 extracts streams of a video and an audio from the transport stream TS that is temporarily stored in the container buffer 213. In addition, the demultiplexer 214 extracts a multiple stream descriptor as allocation information from the transport stream TS, and transmits the multiple stream descriptor to a control unit (CPU). The control unit recognizes, using the descriptor, that decoding time stamps are allocated to a plurality of view streams at intervals in which a display period is subdivided. The control unit can rapidly move to a time stamp management through the decoding time stamp that is allocated to each of the view streams.

The view streams of the left eye view and the right eye view which are extracted by the demultiplexer 214 are supplied to the coded buffers 215-1 and 215-2, respectively, and are temporarily stored. The video decoders 216-1 and 216-2 perform a decoding process of the view streams that are stored in the coded buffers 215-1 and 215-2, and thus the left eye image data and the right eye image data are obtained.

The pieces of image data of the left eye and the right eye which are obtained by the video decoders 216-1 and 216-2 are supplied to the decoded buffers 217-1 and 217-2, respectively, and are temporarily stored. The scalers 218-1 and 218-2 are adjusted so that an output resolution of each of the pieces of image data of the left eye and the right eye which are output from the decoded buffers 217-1 and 217-2, respectively, becomes a predetermined resolution. The pieces of image data of the left eye and the right eye of which the resolution is adjusted are supplied to the rendering unit 229. The rendering unit 229 performs a process for a 3D stereoscopic image display on the pieces of image data of the left eye and the right eye, and the pieces of image data are supplied to a display. Thereby, an image display for a 3D stereoscopic image display, for example, a time-division display of the left eye image and the right eye image, is performed.

As mentioned above, in the image transmission and reception system 10 shown in Fig. 1, decoding time stamps are allocated to a plurality of view streams within a multiplexed stream at intervals in which a display period is subdivided. For this reason, since a decoding order and a reference relationship between views are ensured, it is possible to smoothly perform the decoding process on the reception side without a failure.

In addition, in the image transmission and reception system 10 shown in Fig. 1, allocation information is inserted into a layer of the transport stream TS, for example, under a PMT. The allocation information indicates that decoding time stamps are allocated to a plurality of view streams at intervals in which a display period is subdivided. For this reason, on the reception side, it is possible to recognize that the decoding time stamps are allocated to the plurality of view streams at intervals in which the display period is subdivided, on the basis of the allocation information. Thereby, on the reception side, it is possible to rapidly perform the movement to a time stamp management through the decoding time stamp that is allocated to each of the view streams.

<2. Modified Example>

Meanwhile, the above- mentioned embodiment is focused on a stereoscopic image display service as a multi-view service. However, this technology can be also applied to other multi- view services, for example, a multi- angle view simultaneous display service, and a view providing service according to users.

In addition, in the above-mentioned embodiment, the image transmission and reception system 10 including the broadcasting station 100 and the receiver 200 has been described. However, the configuration of the image transmission and reception system to which this technology can be applied is not limited thereto. For example, a portion of the receiver 200 may be configured as, for example, a set-top box or a monitor that is connected by a digital interface such as an HDMI (High-Definition Multimedia Interface).

In addition, in the above-mentioned embodiment, an example in which a container is a transport stream (MPEG-2 TS) has been described. However, this technology can also be applied to a system having a configuration in which a delivery to a reception terminal is performed using a network such as the Internet. In the delivery through the Internet, the delivery is often performed using a container having an MP4 or any of various other formats. In other words, the container includes a container having any of various other formats such as a transport stream (MPEG-2 TS) that is employed in a digital broadcasting standard or an MP4 that is used in a delivery through the Internet.

In addition, this technology can also employ the following configuration.

(1) A transmission device including:

a transmission unit that transmits a multiplexed stream obtained by multiplexing a plurality of view streams; and
a time stamp allocation unit that allocates decoding time stamps to the plurality of view streams at intervals in which a display period is subdivided.

(2) The transmission device according to (1),
wherein the transmission unit transmits a container having a predetermined format which includes the multiplexed stream, and
wherein the transmission device further includes an information insertion unit that inserts allocation information into a layer of the container, the allocation information indicating that the decoding time stamps are allocated to the plurality of view streams at intervals in which the display period is subdivided.

(3) The transmission device according to (2),
wherein the container is a transport stream, and
wherein the information insertion unit inserts the allocation information under a program map table.

(4) The transmission device according to (3), wherein the allocation information includes information indicating whether or not the corresponding elementary stream has a plurality of view streams.

(5) The transmission device according to any one of (1) to (4), wherein the multiplexed stream has an elementary stream including a plurality of view streams.

(6) The transmission device according to (5), wherein information indicating a boundary between views is disposed between the view streams.

(7) The transmission device according to any one of (1) to (6), wherein the plurality of view streams are streams of a predetermined number of views that are selected from a plurality of views for a multi-viewpoint stereoscopic image display.

(8) The transmission device according to any one of (1) to (6), wherein the plurality of view streams are streams of two views for a 3D stereoscopic image display.

(9) The transmission device according to any one of (1) to (8), wherein the plurality of view streams include streams of disparity information as additional view streams.

(10) A transmission method including:

a transmission step of transmitting a multiplexed stream obtained by multiplexing a plurality of view streams; and
a time stamp allocation step of allocating decoding time stamps to the plurality of view streams at intervals in which a display period is subdivided.

(11) A reception apparatus including:

a reception unit that receives a multiplexed stream obtained by multiplexing a plurality of view streams; and
a decoding unit that decodes the plurality of view streams within the multiplexed stream,
wherein decoding time stamps are allocated to the plurality of view streams at intervals in which a display period is subdivided, and
wherein the decoding unit sequentially decodes a plurality of view streams on the basis of the decoding time stamp that is allocated to each of the view streams.

(12) The reception apparatus according to (11),
wherein the reception unit receives a container having a predetermined format which includes the multiplexed stream,
wherein allocation information is inserted into a layer of the container, the allocation information indicating that the decoding time stamps are allocated to the plurality of view streams at intervals in which the display period is subdivided, and
wherein when the allocation information is present, the decoding unit sequentially decodes a plurality of view streams on the basis of the decoding time stamp that is allocated to each of the view streams.

(13) A reception method including:

a reception step of receiving a multiplexed stream obtained by multiplexing a plurality of view streams; and
a decoding step of decoding the plurality of view streams within the multiplexed stream,
wherein decoding time stamps are allocated to the plurality of view streams at intervals in which a display period is subdivided, and
wherein in the decoding step, a plurality of view streams are sequentially decoded on the basis of the decoding time stamp that is allocated to each of the view streams.

(14) A transmission device including:

a transmission unit that transmits a multiplexed stream obtained by multiplexing a plurality of view streams; and
a time stamp allocation unit that allocates time stamps to the plurality of view streams in consideration of a dependence relationship between streams.

This technology has the following main features. When N view streams related to a simultaneous display are multiplexed and transmitted, a fixed offset of a sequential $(1/N) \times F$ (F is a display period) is added to a decoding time stamp that is allocated to each of the view streams, thereby allowing a decoding order and a reference relationship between views to be ensured (see Fig. 3). Reference Signs List
| 10 | IMAGE TRANSMISSION AND RECEPTION SYSTEM |
| 100 | BROADCASTING STATION |
| 110, 110A, 110B | TRANSMISSION DATA GENERATION UNIT |
| 111- 1 TO 111- N | IMAGE DATA OUTPUT UNIT |

| | |
|---|---|
| 112 | VIEW SELECTOR |
| 113- 1, 113- 2, 113- 3 | SCALER |
| 114- 1, 114- 2, 114- 3 | VIDEO ENCODER |
| 115 | MULTIPLEXER |
| 116 | DISPARITY DATA GENERATION UNIT |
| 117 | DISPARITY ENCODER |
| 118 | VOICE DATAOUTPUT UNIT |
| 119 | AUDIO ENCODER |
| 120 | CONTAINER BUFFER |
| 200, 200A, 200B | RECEIVER |
| 213 | CONTAINER BUFFER |
| 214 | DEMULTIPLEXER |
| 215- 1, 215- 2, 215- 3, 221, 225 | CORDED BUFFER |
| 216- 1, 216- 2, 216- 3 | VIDEO DECODER |
| 217- 1, 217- 2, 217- 3 | DECODED BUFFER |
| 218- 1, 218- 2, 218- 3 | SCALER |
| 219 | VIEW INTERPOLATION UNIT |
| 220 | PIXEL INTERLEAVER |
| 222 | DISPARITY DECODER |
| 223 | DISPARITY BUFFER |
| 224 | DISPARITY DATA CONVERSION UNIT |
| 226 | AUDIO DECODER |
| 227 | CHANNEL MIXING UNIT |
| 228 | DISPARITY DATA GENERATION UNIT |
| 229 | RENDERING UNIT |

**Claims**

1. A transmission device comprising:

   a transmission unit that transmits a multiplexed stream obtained by multiplexing a plurality of view streams; and
   a time stamp allocation unit that allocates decoding time stamps to the plurality of view streams at intervals in which a display period is subdivided.

2. The transmission device according to claim 1,
   wherein the transmission unit transmits a container having a predetermined format which includes the multiplexed stream, and
   wherein the transmission device further comprises an information insertion unit that inserts allocation information into a layer of the container, the allocation information indicating that the decoding time stamps are allocated to the plurality of view streams at intervals in which the display period is subdivided.

3. The transmission device according to claim 2,
   wherein the container is a transport stream, and
   wherein the information insertion unit inserts the allocation information under a program map table.

4. The transmission device according to claim 3, wherein the allocation information includes information indicating whether or not the corresponding elementary stream has a plurality of view streams.

5. The transmission device according to claim 1, wherein the multiplexed stream has an elementary stream including a plurality of view streams.

6. The transmission device according to claim 5, wherein information indicating a boundary between views is disposed between the view streams.

7. The transmission device according to claim 1, wherein the plurality of view streams are streams of a predetermined number of views that are selected from a plurality of views for a multi-viewpoint  stereoscopic image display.

8. The transmission device according to claim 1, wherein the plurality of view streams are streams of two views for a 3D stereoscopic image display.

9. The transmission device according to claim 1, wherein the plurality of view streams include streams of disparity information as additional view streams.

10. A transmission method comprising:

   a transmission step of transmitting a multiplexed stream obtained by multiplexing a plurality of view streams; and
   a time stamp allocation step of allocating decoding time stamps to the plurality of view streams at intervals in which a display period is subdivided.

11. A reception apparatus comprising:

   a reception unit that receives a multiplexed stream obtained by multiplexing a plurality of view streams; and
   a decoding unit that decodes the plurality of view streams within the multiplexed stream,
   wherein decoding time stamps are allocated to the plurality of view streams at intervals in which a display period is subdivided, and
   wherein the decoding unit sequentially decodes a plurality of view streams on the basis of the decoding time stamp that is allocated to each of the view streams.

12. The reception apparatus according to claim 11,
   wherein the reception unit receives a container having a predetermined format which includes the multiplexed stream,
   wherein allocation information is inserted into a layer of the container, the allocation information indicating that the decoding time stamps are allocated to the plurality of view streams at intervals in which the display period is subdivided, and
   wherein when the allocation information is present, the decoding unit sequentially decodes a plurality of view streams on the basis of the decoding time stamp that is allocated to each of the view streams.

13. A reception method comprising:

   a reception step of receiving a multiplexed stream obtained by multiplexing a plurality of view streams; and
   a decoding step of decoding the plurality of view streams within the multiplexed stream,
   wherein decoding time stamps are allocated to the plurality of view streams at intervals in which a display period is subdivided, and
   wherein in the decoding step, a plurality of view streams are sequentially decoded on the basis of the decoding time stamp that is allocated to each of the view streams.

14. A transmission device comprising:

   a transmission unit that transmits a multiplexed stream obtained by multiplexing a plurality of view streams; and
   a time stamp allocation unit that allocates time stamps to the plurality of view streams in consideration of a dependence relationship between streams.

# FIG. 1

10

| BROADCASTING STATION | TS → | RECEIVER |
|---|---|---|

100                                                200

# FIG. 2

(a)  1080

|  | 1920 | 1920 | 1920 |
|---|---|---|---|
|  | **Left** | **Right** | **Center** |

(b)  1080

|  | 1920 | 1920 | 1920 | 1920 |
|---|---|---|---|---|
|  | **Left** | **Right** | **Center** | **Disparity data** |

(c)  1080

|  | 1920 | 1920 |
|---|---|---|
|  | **Left** | **Right** |

EP 2 658 267 A1

# FIG. 3

(a)

| | | |
|---|---|---|
| VIEW 1 (Left) | P1-1 | P1-2 |
| VIEW 2 (Right) | P2-1 | P2-2 |
| VIEW 3 (Center) | P3-1 | P3-2 |

• • •

(b) ALLOCATION OF DTS

P1-1    P1-2

P2-1    P2-2

+(1/3)*F    +(1/3)*F

P3-1    P3-2

+(1/3)*F    +(1/3)*F

• • •

$$DTS(view2) = DTS(view1) + (1/3)*F$$

$$DTS(view3) = DTS(view2) + (1/3)*F$$

EP 2 658 267 A1

# FIG. 4

(a)

| | | |
|---|---|---|
| VIEW 1 (Left) | P1-1 | P1-2 |
| VIEW 2(Right) | P2-1 | P2-2 |
| VIEW 3 (Center) | P3-1 | P3-2 |
| Disparity data | P4-1 | P4-2 |

• • •

(b)   ALLOCATION OF DTS

P1-1                    P1-2

+(1/4)*F → P2-1          +(1/4)*F → P2-2

+(1/4)*F → P3-1          +(1/4)*F → P3-2

+(1/4)*F → P4-1          +(1/4)*F → P4-2

+(1/4)*F                 +(1/4)*F

• • •

$$DTS(view2) = DTS(view1) + (1/4)*F$$

$$DTS(view3) = DTS(view2) + (1/4)*F$$

$$DTS(Disparity) = DTS(view3) + (1/4)*F$$

# FIG. 5

(a)  VIEW 1  (Left)  P1-1    P1-2    • • •

VIEW 2 (Right)  P2-1    P2-2

(b)  ALLOCATION OF DTS

P1-1    P1-2    • • •

P2-1    P2-2

$+(1/2)*F$    $+(1/2)*F$

$$DTS(view2) = DTS(view1) + (1/2)*F$$

EP 2 658 267 A1

# FIG. 6

EP 2 658 267 A1

# FIG. 7

EP 2 658 267 A1

# FIG. 8

MULTIPLEXED ENCODER (IN CASE OF 1-pid)

EP 2 658 267 A1

V1
(VIEW 1) → encoder 11-1

V2
(VIEW 2) → encoder 11-2

→ cpb 12 → mux 13 → MULTIPLEXED STREAM

Container buffer 14

# FIG. 9

### 1-pid (1PES)

**PID_1**
Stream_type A

| PES header | PES payload | PES header | PES payload |
|---|---|---|---|
| DTS1 PTS1 | Access Unit (View 1 picture) | DTS2 PTS2 | Access Unit (View 2 picture) |

PES packet _____ PES packet

**Transport packets**

| PES header | PES payload | PES header | PES payload |
|---|---|---|---|
| DTS1 PTS1 | Access Unit (View 1 picture) | DTS2 PTS2 | Access Unit (View 2 picture) |

½ * F

EP 2 658 267 A1

# FIG. 10

MULTIPLEXED DECODER (IN CASE OF 1-pid)

EP 2 658 267 A1

# FIG. 11

MULTIPLEXED ENCODER (IN CASE OF 2-pid)

EP 2 658 267 A1

# FIG. 12

## 2-pid (2PES)

# FIG. 13

MULTIPLEXED DECODER (IN CASE OF 2-pid)

EP 2 658 267 A1

## FIG. 14

(a)

| AUD (0x09) | SPS (0x07) | PPS (0x08) | SEI (0x06) | Coded Slice (0x05 TO 0x01) | Subset SPS (0x0f) | PPS (0x08) | SEI (0x06) | Coded Slice (0x05 TO 0x01) | - - - |

1 access unit          1 access unit

HEXADECIMAL NUMBER INDICATES NAL unit type

(b)

| AUD (0x09) | SPS (0x07) | PPS (0x08) | SEI (0x06) | Coded Slice (0x05 TO 0x01) | View Separation Marker (0x23) | Subset SPS (0x0f) | PPS (0x08) | SEI (0x06) | Coded Slice (0x05 TO 0x01) | - - - |

1 access unit          1 access unit

EP 2 658 267 A1

# FIG. 15

**(a)** LEADING ACCESS UNIT AT THE TIME OF RANDOM ACCESS

| AUD | SPS 1st sub stream | PPS 1st sub stream | SEI 1st sub stream | Coded Slice st1 sub stream | View Separation Marker | Subset SPS 2nd Sub stream | PPS 2nd Sub stream | SEI 2nd sub stream | Coded Slice 2nd sub Stream | View Separation Marker | Subset SPS 3rd Sub stream | PPS 3rd Sub stream |
|---|---|---|---|---|---|---|---|---|---|---|---|---|

| SEI 3rd sub stream | Coded Slice 3rd sub Stream |
|---|---|

1 access unit     1 access unit     1 access unit

**(b)** NON-LEADING ACCESS UNIT AT THE TIME OF RANDOM ACCESS

| AUD | PPS 1st sub stream | SEI 1st sub stream | Coded Slice 1st sub stream | View Separation Marker | PPS 2nd Sub stream | SEI 2nd sub stream | Coded Slice 2nd sub Stream | View Separation Marker | PPS 3rd Sub stream | SEI 3rd sub stream | Coded Slice 3rd sub Stream |
|---|---|---|---|---|---|---|---|---|---|---|---|

1 access unit     1 access unit     1 access unit

# FIG. 16

Multiple_stream_descriptor

| Syntax | No. of Bits | Format |
|---|---|---|
| Multiple_stream_descriptor() { | | |
| Multiple_stream_tag | 8 | uimslbf |
| Multiple_stream_length | 8 | uimslbf |
| multiple_stream_flag | 1 | bslbf |
| if( !multiple_stream_flag ){ | | |
| view_ordering | 4 | bslbf |
| 1$^{st}$_view_left | 1 | bslbf |
| reserved | 2 | 0x3 |
| } | | |
| else { | | |
| reserved | 7 | 0x7f |
| } | | |
| } | | |

# FIG. 17

multiple_stream  descriptor  semantics

**multiple_stream_flag**            1bit

      INDICATE WHETHER OR NOT CORRESPONDING STREAM HAS streams OF PLURALITY OF views.

  "1":  PLURALITY OF view streams ARE PRESENT.

  "0":  PLURALITY OF view streams ARE NOT PRESENT.

**view_ordering**           4bits

      FIRST view WHICH SERVES AS REFERENCE OF DISPLAY IS SET TO "1",
AND VALUES OF 1 TO 15 ARE TAKEN.

**1ˢᵗ_view_left**           1bit

      INDICATE WHETHER "1" OF view_ordering IS left OR right.

  "1":  view_order (1) IS left. OTHER views APPROACH right IN THE ORDER OF view_order.

  "0":  view_order (1) IS right. OTHER views APPROACH left IN THE ORDER OF view_order.

EP 2 658 267 A1

# FIG. 18

```
┌─────────────────────────────────┐
│       Transport Stream          │
└─────────────────────────────────┘

    ┌──────┐                          ┌──────────────────────┐
    │ PMT  │                          │  PID1: video PES1    │
    └──────┘                          └──────────────────────┘

  ┌──────────────────┐
  │  video ES loop   │
  └──────────────────┘

    ┌─────────────────────────────────┐
    │ Elementary PID (PID1)           │
    │ Multiple_stream_descriptor      │
    │   Multiple_stream_flag == 1     │
    └─────────────────────────────────┘
```

# FIG. 19

```
┌─────────────────────────────────┐
│       Transport Stream          │
└─────────────────────────────────┘

    ┌──────┐                          ┌──────────────────────┐
    │ PMT  │                          │  PID1: video PES1    │
    └──────┘                          └──────────────────────┘

  ┌──────────────────┐
  │  video ES loop   │
  └──────────────────┘

    ┌─────────────────────────────────┐
    │ Elementary PID (PID1)           │
    │ Multiple_stream_descriptor      │
    │   Multiple_stream_flag == 0     │
    │   View_ordering == 1            │
    └─────────────────────────────────┘   ┌──────────────────────┐
                                           │  PID2: video PES2    │
    ┌─────────────────────────────────┐   └──────────────────────┘
    │ Elementary PID (PID2)           │
    │ Multiple_stream_descriptor      │
    │   Multiple_stream_flag == 0     │
    │   View_ordering == 2            │
    └─────────────────────────────────┘
```

# FIG. 20

Transport Stream

PMT

video ES loop

Elementary PID (PID1)
Multiple_stream_descriptor
  Multiple_stream_flag == 0
  View_ordering == 1

Elementary PID (PID2)
Multiple_stream_descriptor
  Multiple_stream_flag == 0
  View_ordering == 2

Elementary PID (PID3)
Multiple_stream_descriptor
  Multiple_stream_flag == 0
  View_ordering == 3

**PID1: video PES1**

**PID2: video PES2**

**PID3: video PES3**

# FIG. 21

# FIG. 22

**200**

PTS

DTS1,DTS2,DTS3

| | |
|---|---|
| TS → **213** CONTAINER BUFFER | → **214** DEMULTIPLEXER |

**215-1** CODED BUFFER (DTS1) → **216-1** VIDEO DECODER (1st View) → **217-1** DECODED BUFFER → **218-1** SCALER

**215-2** CODED BUFFER (DTS2) → **216-2** VIDEO DECODER (2nd View) → **217-2** DECODED BUFFER → **218-2** SCALER

**215-3** CODED BUFFER (DTS3) → **216-3** VIDEO DECODER (3rd View) → **217-3** DECODED BUFFER → **218-3** SCALER

**219** VIEW INTERPOLATION UNIT → View1, View2, ... ViewN → **220** PIXEL INTERLEAVER → To Display

**221** CODED BUFFER → **222** DISPARITY DECODER → **223** DISPARITY BUFFER → **224** DISPARITY DATA CONVERSION UNIT (or SCALER)

**225** CODED BUFFER → **226** AUDIO DECODER → **227** CHANNEL MIXING UNIT → To Speaker

EP 2 658 267 A1

# FIG. 23

EP 2 658 267 A1

# FIG. 24

200A

TS → CONTAINER BUFFER (213) → DEMULTIPLEXER (214)

PTS

DTS1,DTS2,DTS3

DTS1 → CODED BUFFER (215-1) → VIDEO DECODER (1st View) (216-1) → DECODED BUFFER (217-1) → SCALER (218-1) → VIEW INTERPOLATION UNIT (219)

DTS2 → CODED BUFFER (215-2) → VIDEO DECODER (2nd View) (216-2) → DECODED BUFFER (217-2) → SCALER (218-2)

DTS3 → CODED BUFFER (215-3) → VIDEO DECODER (3rd View) (216-3) → DECODED BUFFER (217-3) → SCALER (218-3)

DISPARITY DATA GENERATION UNIT (228)

VIEW INTERPOLATION UNIT (219) → View1, View2, ViewN → PIXEL INTERLEAVER (220) → To Display

CODED BUFFER (225) → AUDIO DECODER (226) → CHANNEL MIXING UNIT (227) → To Speaker

EP 2 658 267 A1

# FIG. 25

EP 2 658 267 A1

# FIG. 26

200B

EP 2 658 267 A1

| | INTERNATIONAL SEARCH REPORT | International application No. |
|---|---|---|
| | | PCT/JP2012/081745 |

A. CLASSIFICATION OF SUBJECT MATTER
*H04N13/00*(2006.01)i, *H04N7/173*(2011.01)i

According to International Patent Classification (IPC) or to both national classification and IPC

B. FIELDS SEARCHED

Minimum documentation searched (classification system followed by classification symbols)
H04N13/00, H04N7/173

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2011-30193 A (Sony Corp.), 10 February 2011 (10.02.2011), paragraphs [0037] to [0048], [0162] to [0176], [0322] to [0351]; fig. 1 to 4, 43 to 50 & US 2011/0134210 A1 & EP 2451171 A1 & CN 102342113 A & KR 10-2012-0029370 A | 1-14 |
| Y | JP 2010-283856 A (Panasonic Corp.), 16 December 2010 (16.12.2010), paragraphs [0149] to [0161]; fig. 29 to 33 & US 2010/0312866 A1 | 1-14 |
| A | JP 2011-234113 A (Sony Corp.), 17 November 2011 (17.11.2011), paragraphs [0030] to [0036]; fig. 1 & EP 2434767 A1 & CN 102474643 A | 2-4 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 February, 2013 (05.02.13) | 19 February, 2013 (19.02.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

44

**INTERNATIONAL SEARCH REPORT**

International application No.

PCT/JP2012/081745

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2010-263616 A (Sony Corp.),<br>18 November 2010 (18.11.2010),<br>paragraph [0551]; fig. 51<br>& US 2011/0075989 A1 & EP 2288173 A1<br>& CN 102282858 A & KR 10-2012-0068658 A | 6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011135458 A

- JP 2005006114 A